# EUROPEAN PATENT APPLICATION

(11) **EP 4 814 556 A1**
(43) Date of publication of application: **30.09.2026**
(21) Application number: 24894640.2
(22) Date of filing: 21.11.2024
(51) Int. Cl.: G02B 9/34, G01S 7/481, G02B 13/00, G02B 13/18, G03B 17/12, G03B 9/02, H04N 23/55, G02B 3/00

(54) **OPTICAL SYSTEM, SENSOR SYSTEM, AND LIDAR DEVICE**

(30) Priority: 23.11.2023 KR 20230164603; 23.11.2023 KR 20230164624; 04.10.2024 KR 20240135127; 04.10.2024 KR 20240135137
(71) Applicant: LG Innotek Co., Ltd., Seoul 07796 (KR); Hyundai Mobis Co., Ltd., Gangnam-gu Seoul 06141 (KR)
(72) Inventor: KIM, Jinyoung, Seoul 07796 (KR)
(74) Representative: Plasseraud IP
(86) International application number: PCT/KR2024/018497
(87) International publication number: WO 2025/110748

(57) **Abstract**

The optical system disclosed in an embodiment of the invention comprises a first to fifth lens aligned along an optical axis from an object toward a sensing portion; and an optical filter disposed in any one of the regions between the second to fifth lenses, wherein the first lens has a convex meniscus shape toward the object on the optical axis, the object-side surface of the third lens has a concave shape on the optical axis, the radius of curvature of the object-side surface of the first lens on the optical axis is LlR1, the radius of curvature of the sensor-side surface of the first lens on the optical axis is L1R2, and the following $1 < L 1 R 1 / L 1 R 2 < 5$ can be satisfied.

## Description

### Technical Field

An embodiment relates to an optical system and a sensor system for transmitting or receiving. The embodiment relates to a receiving optical system and a sensor system having the same. The embodiment relates to a transmission optical system and a sensor system having the same. The embodiment relates to a receiving optical system for LIDAR (Light detection and ranging) and a device having the same. An embodiment of the invention relates to a mobile body having a receiving optical system and a system for LIDAR.

### Background Art

ADAS (Advanced Driving Assistance System) is an advanced driver assistance system designed to assist the driver. It consists of sensing the conditions ahead, determining the situation based on the sensed results, and controlling the vehicle's behavior based on that determination. For example, ADAS sensor devices detect vehicles ahead and recognize lanes. Subsequently, once a target lane, target speed, or target ahead is identified, the vehicle's ESC (Electrical Stability Control), EMS (Engine Management System), and MDPS (Motor Driven Power Steering) are controlled. Representative examples of ADAS implementation include automatic parking systems, low-speed city driving assistance systems, and blind spot warning systems.

With the recent increase in interest in autonomous vehicles, the demand for LIDAR (Light Detection and Ranging) sensors, a core component, is growing. Currently, LIDAR is used only for high-end, high-priced vehicles, but it is expected to be applied to general-purpose vehicles as manufacturing costs are reduced.

As micro and ultra-lightweight LIDAR technology is expected to be utilized not only as sensors for unmanned mobile devices but also in satellite and aerospace fields for observing Earth's topography and environment, as well as in unmanned vehicles, transporters, cranes, and robots used in factories and shipyards, and even emerge in the form of combined or cooperative operations among mobile devices through an integrated approach across land, aviation, and marine industries, there is an urgent need to develop optical systems for micro and ultra-lightweight LIDAR to realize these devices.

### Disclosure

### Technical Problem

The embodiment provides an optical system with improved optical characteristics and a sensor system having the same. The embodiment provides a wide-angle optical system and a sensor system having the same. The embodiment provides a receiving optical system, a sensor system, and a LIDAR device with improved thermal compensation characteristics. The embodiment provides a transmission optical system, a sensor system, and a LIDAR device with improved thermal compensation characteristics.

### Technical Solution

A transmission optical system according to an embodiment of the invention comprises: first to fifth lenses aligned along an optical axis from an object toward a sensing portion; and an optical filter disposed in any one of the regions between the second to fifth lenses, wherein the first lens has a convex meniscus shape toward the object on the optical axis, the object-side surface of the third lens has a concave shape on the optical axis, the radius of curvature of the object-side surface of the first lens on the optical axis is L1R1, the radius of curvature of the sensor-side surface of the first lens on the optical axis is L1R2, and the Mathematical expression may be satisfied: 1 < L1R1/L1R2 < 5.

According to an embodiment of the invention, the object-side surface of the second lens on the optical axis may have a convex shape. The sensor-side surface of the fourth lens on the optical axis may have a convex shape. The sensor-side surface of the fifth lens on the optical axis may have a convex shape. Among the absolute values of the radii of curvature of the object-side and sensor-side surfaces of the first to fifth lenses, the radius of curvature of the sensor-side surface of the fifth lens may be the largest.

According to an embodiment of the invention, the optical filter may be disposed between two lenses, among the first to fifth lenses, that have a greater center thickness than the other lenses. The optical filter may be disposed between the third lens and the fourth lens.

According to an embodiment of the invention, an optical axis distance from the optical filter to a surface of the sensing portion is DF2, and an optical axis distance from the sensor-side surface of the fifth lens to the surface of the sensing portion is BFL, and may be satisfied the Mathematical expression: BFL < DF2. The optical system includes an aperture stop disposed around the object-side surface of the optical filter or the sensor-side surface of the third lens, and the optical axis distance from the aperture stop to the surface of the sensing portion is SD, and may be satisfied the Mathematical expression: 1 < SD/DF2 < 1.2. The optical axis distance from the center of the object-side surface of the first lens to the optical filter is DF1, and may be satisfied the Mathematical expression: DF2 < DF1.

According to an embodiment of the invention, the first to fifth lenses may be made of glass material. The object-side surfaces and the sensor-side surfaces of the second and fifth lenses may be aspherical.

According to an embodiment of the invention, the optical filter is a band-pass filter that passes a range of 890 nm to 960 nm, and the center distance between the object-side lens and the sensor-side lens of the optical filter may be the largest among the center distances between the first to fifth lenses.

According to an embodiment of the invention, the first and second lenses may have negative refractive power, and the third to fifth lenses may have positive refractive power. The center distance between the third and fourth lenses is CG3, the thickness of the optical filter is OFt, and may be satisfied the Mathematical expression: 2 < CG3 / OFt < 15.

### Advantageous Effects

According to the embodiment, improved optical characteristics may be achieved. Specifically, in the optical system according to the embodiments, the position of the bandpass filter may be placed near the aperture stop to minimize the angle of incidence of light entering the filter. Accordingly, the transmittance range of the bandpass filter may be widely utilized depending on the angle of incidence of light on the bandpass filter.

The receiving optical system of the LIDAR of the invention can maximize the effect of receiving light emitted from the transmission optical system. According to the embodiment, improved optical characteristics may be achieved. The LIDAR device of the invention can maximize the extraction efficiency of light emitted from the transmitting/receiving optical system.

The receiving optical system of the LIDAR of the invention can achieve good optical characteristics in a temperature range from low to high temperatures. Specifically, a plurality of lenses included in the receiving optical system may have a set material, refractive power, and refractive index. Accordingly, if the refractive index of each lens changes due to temperature changes and the focal length of each lens changes as a result, mutual compensation may be achieved by the glass mold lens and the glass lens. That is, the optical system can effectively distribute refractive power within a temperature range from low to high temperatures, and can prevent or minimize changes in optical characteristics within that range. Therefore, the optical system and sensor system according to the embodiment can maintain enhanced optical characteristics across various temperature ranges.

The lenses of the optical system of the LIDAR of the invention may have a set thickness, refractive power, and distance between adjacent lenses. Accordingly, the optical system and sensor system according to the embodiment may have enhanced MTF characteristics, aberration control characteristics, resolution characteristics, etc., within a set field of view range, and may have good optical performance at the periphery of the field of view.

The optical system and sensor system according to the embodiment can achieve excellent optical characteristics while satisfying the set field of view through a combination of glass mold lenses and glass lenses. As a result, the optical system can provide a slimmer sensor system for vehicles. Therefore, the optical system and sensor system may be provided for various applications and devices, and may provide excellent optical characteristics even when exposed to harsh temperature environments, such as the exterior of a vehicle or the interior of a vehicle at high temperatures during the summer.

### Description of Drawings

FIG. 1 is a side cross-sectional view of the receiving optical system of a LIDAR according to an embodiment.
FIG. 2 is a table showing the lens characteristics of the optical system of FIG. 1.
FIG. 3 is a table showing the aspherical coefficients of the lenses in the optical system of FIG. 1.
FIG. 4 is data regarding the distortion characteristics of the optical system of FIG. 1.
FIG. 5 is a graph showing data on the diffraction MTF (Modulation Transfer Function) according to low, room, and high temperatures in the optical system of FIG. 1.
FIG. 6 is a graph showing data on the aberration characteristics of the optical system of FIG. 1 at low temperature.
FIG. 7 is a graph showing data on the aberration characteristics of the optical system of FIG. 1 at room temperature.
FIG. 8 is a graph showing data on the aberration characteristics of the optical system of FIG. 1 at high temperature.
FIG. 9 is a graph comparing the transmittance curves for the filter of the optical system of FIG. 1 when the incident angle of the main beam, measured by an automatic optical inspection (AOI) device, is 0, 20, and 40 degrees.
FIG. 10 is a block diagram showing a sensor system having the optical system of FIG. 1.
FIG. 11 is a side cross-sectional view of the transmission optical system of a LIDAR according to an embodiment.
FIG. 12 is a diagram showing the first lens and diffuser of the optical system of FIG. 11.
FIG. 13 is a diagram comparing the comparative example and the embodiment regarding the light refraction characteristics by the lens array of the diffuser of the transmission optical system of FIG. 11.
FIG. 14 is a table showing the lens characteristics of the optical system of FIG. 11.
FIG. 15 is a table showing the aspherical coefficients of the lenses in the optical system of FIG. 11.
FIG. 16 is a graph showing data on the diffraction MTF according to low, room, and high temperatures in the optical system of FIG. 11.
FIG. 17 is a graph showing data on the aberration characteristics of the optical system of FIG. 11 at low temperature.
FIG. 18 is a graph showing data on the aberration characteristics of the optical system of FIG. 11 at room temperature.
FIG. 19 is a graph showing data on the aberration characteristics of the optical system of FIG. 11 at high temperature.
FIG. 20 is data on the distortion characteristics of the optical system of FIG. 11.
FIG. 21 is a graph showing pixel-unit matching results according to the light source height and divergence angle in the transmission optical system of FIG. 11.
FIG. 22 is a graph showing pixel-unit matching results according to the image height and field of view in the receiving optical system of FIG. 1.
FIG. 23 is a diagram showing an example of measuring an object in a vehicle equipped with the sensor system of the invention.
FIG. 24 is a diagram showing an example of surrounding surveillance in a vehicle having the sensor system of the invention.

### Best Mode

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted as having a meaning generally understood by those having ordinary skill in the art to which the invention pertains, and terms that are commonly used such as terms defined in a dictionary should interpreted in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the invention, "object-side surface" may refer to a surface of the lens facing the object side with respect to the optical axis OA, and "sensor-side surface" may refer to a surface of the lens facing the imaging surface (surface of the sensing portion) with respect to the optical axis. That one surface of the lens is convex may refer to a shape that is convex in the optical axis or paraxial region, and that one surface of the lens is concave may refer to a shape that is concave in the optical axis or paraxial region. The radius of curvature, center thickness, and optical axis distance between lenses listed in the table of lens data may refer to values (unit, mm) in the optical axis. The vertical direction may refer to a direction perpendicular to the optical axis, and the end of the lens or lens surface may refer to the end of the effective area of the lens through which incident light passes. The size of the effective diameter of the lens surface may have a measurement error of up to ±0.4 mm depending on the measurement method, etc. The paraxial region refers to a very narrow region near the optical axis, and is a region where the distance of light rays from the optical axis OA is almost zero. Hereinafter, the term optical axis may include the center of each lens or a very narrow region near the optical axis.

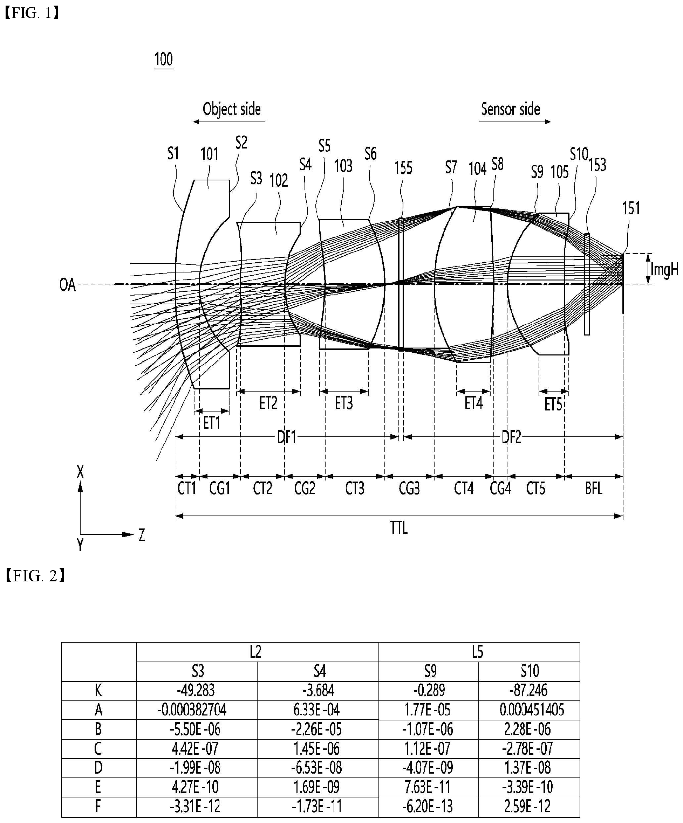

FIG. 1 is a side cross-sectional view showing the receiving optical system of the invention.

Referring to FIG. 1, the optical system 100 and the sensor system including the sme may be mounted inside or outside a vehicle to monitor the driver or sense external objects or lanes. The material of each of the lenses may be selected as glass or plastic, and the coefficient of linear expansion of the lenses is smaller for glass than for plastic. Therefore, glass lenses are used to suppress changes in the focal position due to temperature changes. However, if the optical system is constructed with spherical glass lenses, there is a limit to reducing the number of lenses, and there is a limit to reducing the size and weight.

The optical system 100 of the embodiment of the invention is a receiving optical system and may include a spherical lens and an aspherical lens. Here, the spherical lens is a lens in which at least one or both of the object-side surface and the sensor-side surface of the lens are spherical. The aspherical lens is a lens in which at least one or both of the object-side surface and the sensor-side surface of the lens are aspherical. The optical system 100 may include a spherical glass lens and an aspherical glass lens. Additionally, since an aspherical lens is employed, the total length (TTL) of the optical system 100 may be reduced, and good correction for various aberrations such as spherical aberration and chromatic aberration may be possible due to the aspherical lens. Additionally, the aspherical lens may minimize distortion in the peripheral area of the sensing portion 151. The optical system 100 may include n lenses, where the n-th lens is the last lens adjacent to the sensing portion 151, and the n-1th lens is the lens closest to the last lens. n is an integer greater than or equal to 4, for example, in the range of 4 to 7 or 4 to 6. The ratio of the spherical lens to the aspherical lens among the n lenses may be any one of 3:1, 4:1, 3:2, 2:3, 3:3, 5:2, or 4:2.

In the optical system 100, the first lens 101 closest to the object may be made of glass. The glass material has a small amount of expansion and contraction change due to external temperature changes and its surface is not easily scratched, thus preventing surface damage. Accordingly, in the optical system 100, the first lens 101 on the object side may be a spherical lens, and the n-th lens may be an aspherical lens. Since the n-th lens in the optical system 100 is an aspherical lens, various aberrations may be corrected for the incident light of the sensing portion 151.

Since at least two lenses closest to the object within the optical system 100 are made of glass, the rate of change of contraction and expansion due to temperature changes is smaller than that of plastic material, thereby preventing the degradation of optical properties due to temperature changes within the lens barrel. Additionally, the optical system 100 has the lens 105 closest to the sensing portion 151 disposed in a glass mold material. As a result, the rate of change of shrinkage and expansion due to temperature changes in the lens 105 is lower than that of plastic material, thereby preventing the degradation of optical properties due to temperature changes within the lens barrel.

Each lens 101-105 may have an object-side surface and a sensor-side surface. The object-side surface and the sensor-side surface are the two lens surfaces of the lenses. The optical system 100 may include a spherical lens on the object side and a spherical lens on the sensor side, and an aspherical lens on the object side and an aspherical lens on the sensor side. In the optical system, the number of aspherical lenses may be smaller than the number of spherical lenses. Since the aspherical lenses are placed adjacent to the sensing portion 151, the aspherical lenses can correct various aberrations of the optical system 100. The spherical lenses and aspherical lenses may be made of glass material. Among the lenses of the optical system 100, the lens having the maximum refractive index may be a spherical lens, and the lens having the maximum Abbe number may be an aspherical lens. Since the first lens 101 has a high refractive index and is positioned adjacent to the object, the first lens 101 may have a thin center thickness CT1 and may provide an effective diameter on the sensor side that is smaller than the effective diameter on the object side.

The first lens 101 has a lens surface having the maximum effective diameter within the optical system 100. The lens having the minimum effective diameter within the optical system 100 may be located between the aperture stop ST and the first lens 101. Additionally, the effective diameter of the aspherical lenses may be smaller than the effective diameter of the spherical lenses. Here, the effective diameter of the lens is the average value of the effective diameter on the object side and the effective diameter on the sensor side of each lens. The optical system 100 may be miniaturized by adjusting the effective diameter of each of the lenses. Each of the lenses 101-105 may include an effective region and an ineffective region. The effective region may be an area through which light incident on each of the lenses passes. That is, the effective region may be defined as an effective region or effective diameter where the incident light is refracted to realize optical characteristics. The ineffective region may be placed around the periphery of the effective region. The ineffective region may be an area where effective light is not incident from the plurality of lenses. That is, the ineffective region may be an area unrelated to the optical characteristics. Additionally, the end of the ineffective region may be an area fixed to a lens barrel (not shown), etc., that accommodates the lens.

Among the lenses of the optical system 100, the lens having the maximum center thickness may be a spherical lens. Among the lenses of the optical system 100, the lens having the maximum edge thickness may be a spherical lens. The average center thickness of the aspherical lenses may be smaller than the average center thickness of the spherical lenses disposed between the aspherical lenses. Aspherical lenses with thin thickness can reduce the total top length (TTL) and refract incident light along various paths. Here, TTL is the distance along the optical axis OA from the center of the object-side surface of the first lens 101 to the image surface of the sensing portion 151. Within the optical system 100, TTL may be greater than 10 times ImgH, for example, greater than 10 times and less than 30 times. ImgH is the distance from the center of the effective area of the sensing portion 151 to the diagonal end, or half the maximum diagonal length of the effective area of the sensing portion 151. Within the optical system 100, the effective diameter of each lens may be greater than the diagonal length of the sensing portion 151.

The effective focal length of the optical system 100 may be shortened to 10 mm or less to achieve a wide angle. The effective focal length (EFL) of the optical system 100 may be 10 mm or less, for example, in the range of 1 mm to 10 mm or in the range of 1 mm to 6 mm. Since the effective focal length is 10 mm or less and the field of view (FOV) is provided as greater than 100 degrees, the optical system 100 may be provided as a standard receiving optical system in a vehicle sensor system. For example, the receiving optical system and sensor system according to the embodiment may be applied to a sensing device for an ADAS (Advanced driving assistance system) installed inside or outside a vehicle.

The optical system 100 may have a condition where TTL/(2*ImgH) is greater than 5, for example, in the range of greater than 5 and less than or equal to 10. Accordingly, the center thickness of each lens along the optical axis OA may be increased and the size of the sensing portion 151 may be reduced, thereby providing a vehicle lens optical system. In addition, for use in automotive cameras, temperature compensation must be applied within the temperature range that serves as the temperature reliability evaluation standard for automotive electronic components, namely -45°C to +120°C. That is, the lens must be configured so that the lens focus remains within the set range even when the lens expands or contracts due to changes in temperature. Within the optical system 100, the number of lenses having positive (+) refractive power or power may be equal to or greater than the number of lenses having negative (-) refractive power or power. The number of lenses having positive (+) refractive power or power may be 50% or more of the total number of lenses. Since this optical system 100 is a mixture of spherical lenses and aspherical lenses made of glass material, various aberrations may be corrected, thereby preventing a decrease in optical performance.

An optical system according to an embodiment of the invention will be described.

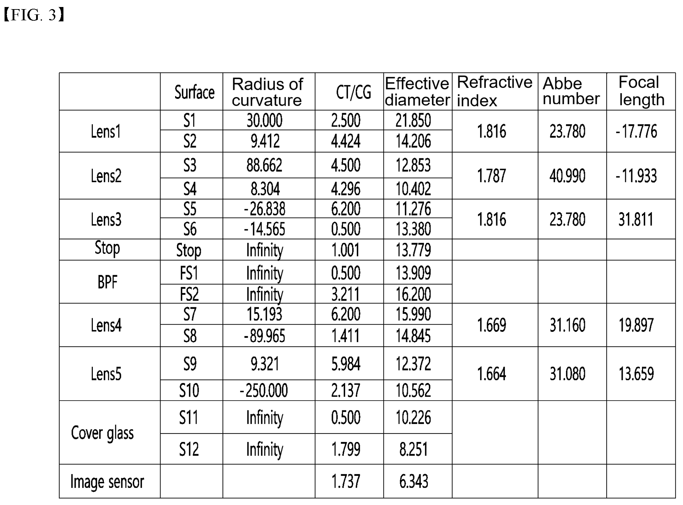

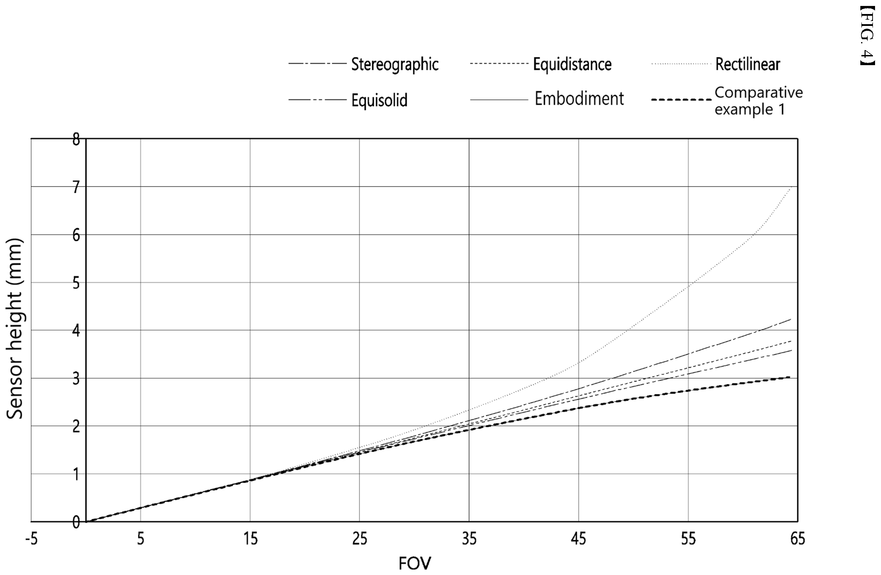

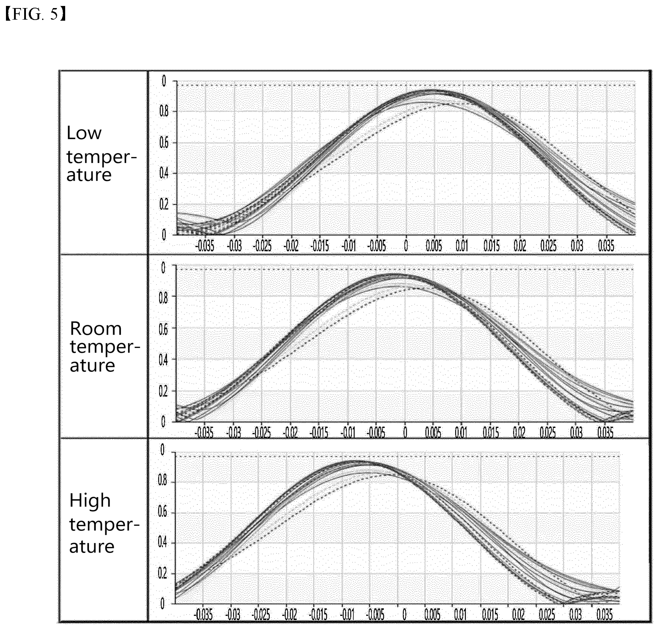

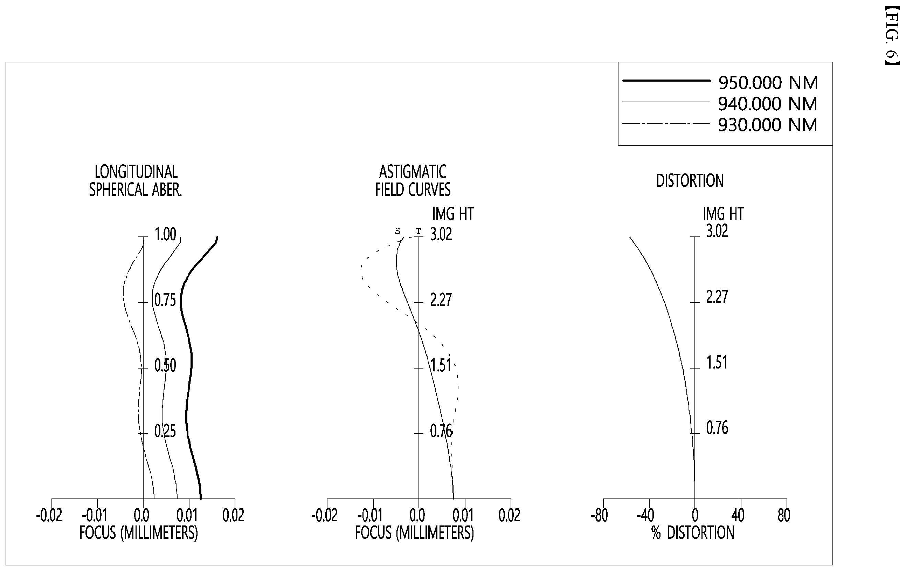

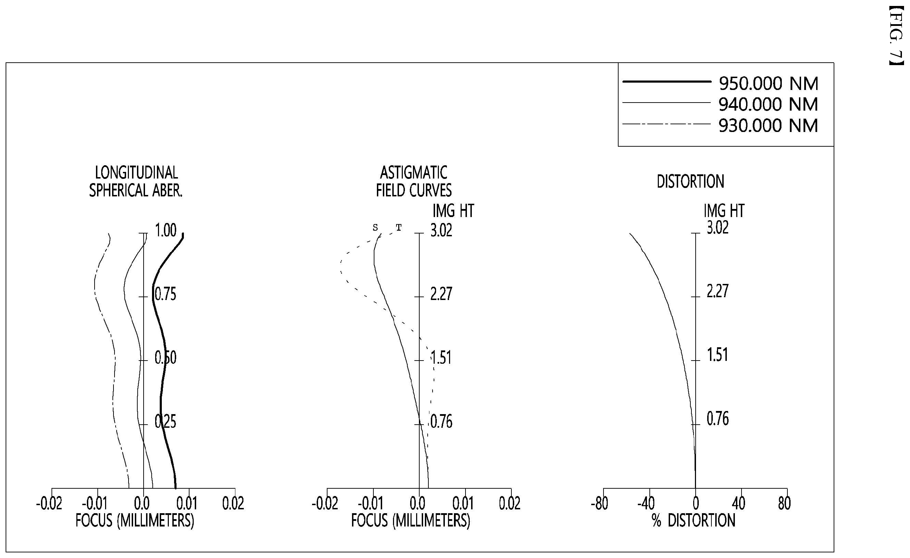

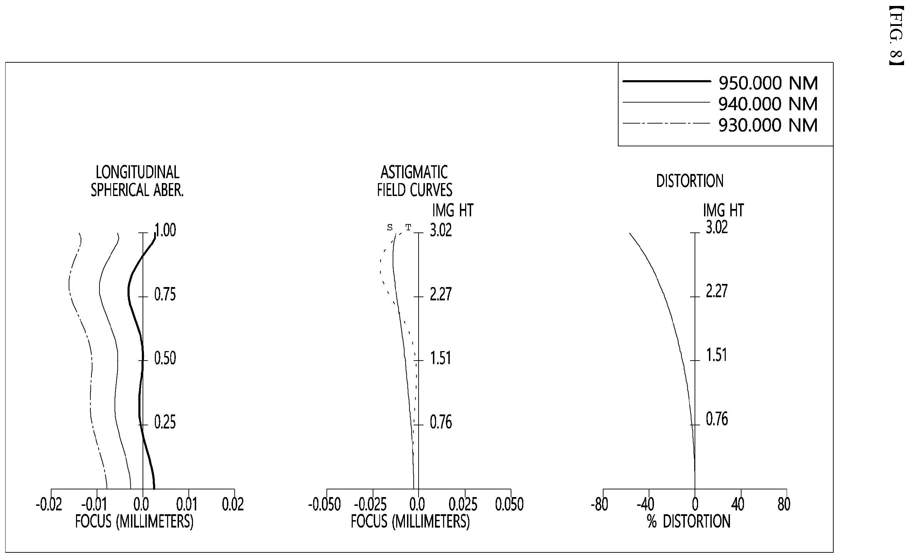

FIG. 1 is a side cross-sectional view of a receiving optical system of a LIDAR according to an embodiment, FIG. 2 is a table showing the lens characteristics of the optical system of FIG. 1, FIG. 3 is a table showing the aspherical coefficients of the lenses in the receiving optical system of FIG. 1, FIG. 4 is data on the distortion characteristics of the receiving optical system of FIG. 1, FIG. 5 is a graph showing data on the diffraction MTF (Modulation Transfer Function) according to low temperature, room temperature, and high temperature in the receiving optical system of FIG. 1, FIG. 6 is a graph showing data on the aberration characteristics of the optical system of FIG. 1 at low temperature, FIG. 7 is a graph showing data on the aberration characteristics of the optical system of FIG. 1 at room temperature, and FIG. 8 is a graph showing data on the aberration characteristics of the optical system of FIG. 1 at high temperature.

Referring to FIGS. 1 to 3, the optical system 100 may include a first lens 101 to a fifth lens 105 aligned with an optical axis OA from the object toward the sensor side. The first through fifth lenses 101-105 may be defined as lens portions. The optical system 100 may include an optical filter 155, and the optical filter 155 may be disposed between the lenses. The optical filter 155 may be disposed between aspherical lenses. The optical filter 155 may be disposed between spherical lenses. The optical filter 155 may be disposed at a position closer to the spherical lenses than to the aspherical lenses. Light corresponding to the information of an object passes through the first lens 101 to the third lens 103, the optical filter 155, and the fourth and fifth lenses 104 and 105 and may be incident on the sensing portion 151.

The first lens 101 may have a positive (+) or negative (-) refractive power on the optical axis OA, and preferably, may have a negative (-) refractive power. The first lens 101 may include a plastic material or a glass material, for example, it may be a glass material. The first lens 101 made of glass material can reduce changes in the center position and radius of curvature, etc., due to temperature changes according to the surrounding environment, and can protect the incident-side surface of the optical system 100. The first lens 101 is a glass material that is not injection molded.

On the optical axis OA, the first surface S1 on the object side of the first lens 101 may have a convex shape, and the second surface S2 on the sensor side may have a concave shape. That is, the first lens 101 may have a meniscus shape that is convex toward the object. The first surface S1 and the second surface S2 may have spherical shapes. The first lens 101 may have a meniscus shape that is convex toward the object side. Alternatively, on the optical axis OA, the first surface S1 may have a concave shape, and the second surface S2 may have a convex shape. Alternatively, the first lens 101 may have a concave shape on both sides.

Since the first surface S1 of the first lens 101 is convex and the second surface S2 is concave, incident light may be refracted in a direction close to the optical axis OA, the edge distance between the first and second lenses 101 and 102 may be reduced, and the effective diameter of the second lens 102 may be reduced. The increase in the effective diameter of the second lens 102 may be suppressed by the shape of the lens surface of the first lens 101.

If the refractive index of the first lens 101 is Nd1, the following condition may be satisfied: 1.7 < Nd1 or 1.75 < Nd1 < 2.1. Since the refractive index (Nd1) of the first lens 101 is higher than that of other aspherical lenses, the radius of curvature of the first surface S1 of the first lens 101 may be increased, and lens manufacturing may be made easier. If the refractive index (Nd1) of the first lens 101 is smaller than the condition, the lens surface must be formed to be sharply concave or convex to increase the refractive power of the second lens 102. In this case, lens manufacturing is not easy, the lens defect rate increases, and it may cause a decrease in yield.

The second lens 102 may be disposed between the first lens 101 and the third lens 103. The second lens 102 may have a positive (+) or negative (-) refractive power on the optical axis OA, for example, it may have a negative (-) refractive power. The second lens 102 may include plastic or glass materials, for example, it may be provided as a glass material. The second lens 102 may be injection molded. On the optical axis OA, the object-side third surface S3 of the second lens 102 may have a convex shape, and the sensor-side fourth surface S4 may have a concave shape. That is, the second lens 102 may have a meniscus shape that is convex toward the object. The third and fourth surfaces S3 and S4 may be aspherical and, as shown in FIG. 4, may be defined as L2S3 and L2S4, and may have a conic constant (K) and aspherical coefficients from the 4th to the 14th order (A~F). The third surface S3 may have a critical point at the end or edge of the effective area on the optical axis OA. Since the third surface S3 has a convex shape on the optical axis OA and has a critical point, the edge of the third surface S3 may protrude further toward the object than the center of the third surface S3. The fourth surface S3 may be provided without a critical point from the optical axis OA to the edge. Alternatively, the third surface S3 may be convex and the fourth surface S4 may be concave on the optical axis OA. Alternatively, the second lens 102 may have a convex shape on both sides. The critical point is a point where the sign of the slope value with respect to the optical axis OA and the direction perpendicular to the optical axis OA changes from positive (+) to negative (-) or from negative (-) to positive (+), and may mean a point where the slope value is 0. Additionally, the critical point may be a point where the slope value of the tangent line passing through the lens surface increases and then decreases, or decreases and then increases.

If the refractive index of the second lens 102 is Nd2, the following condition may be satisfied: 1.8 > Nd2 or 1.55 < Nd2 < 1.8. The refractive index (Nd2) of the second lens 102 is lower than the refractive index of the first and third lenses 101 and 103, and the difference in the radius of curvature of the third and fourth surfaces S3 and S4 may be provided to be 30 mm or more. Accordingly, the second lens 102 can refract light incident through the first lens 101 to the entire area of the third lens 103. Since the third surface S3 of the second lens 102 has a critical point, it can refract the incident light to the entire area of the fourth surface S4. In addition, since the sensor-side fourth surface S4 of the second lens 102 is concave and has a small radius of curvature, an increase in the distance between the second and third lenses 102 and 103 may be prevented.

The third lens 103 may have a positive (+) or negative (-) refractive power on the optical axis OA, for example, it may have a positive (+) refractive power. The third lens 103 may include a plastic or glass material, for example, it may be a glass material. The third lens 103 is a glass material that is not injection molded. On the optical axis OA, the object-side fifth surface S5 of the third lens 103 may have a concave shape, and the sensor-side sixth surface S6 may have a convex shape. That is, the third lens 103 may have a meniscus shape that is convex toward the sensing portion 151 or image sensor on the optical axis OA. At least one or both of the fifth surface S5 and the sixth surface S6 of the third lens 103 may be spherical. At least one or both of the fifth surface S5 and the sixth surface S6 may be provided without a critical point from the optical axis OA to the end of the effective area. Alternatively, the third lens 103 may have a meniscus shape that is convex toward the object. Or, the third lens 103 may have a shape that is concave or convex on both sides from the optical axis. If the refractive index of the third lens 103 is Nd3, the following condition may be satisfied: Nd2 < Nd3. If the Abbe number of the third lens 103 is Vd3, the following condition may be satisfied: Vd3 < Vd2. Here, Vd2 is the Abbe number of the second lens 102.

The optical system 100 may include an aperture stop ST. The aperture stop ST may control the amount of light incident on the optical system 100. The aperture stop ST may be positioned around the perimeter between two adjacent lenses. The aperture stop ST may be positioned around the perimeter of the sensor-side surface S6 of the third lens 103. The aperture stop ST may be positioned around the perimeter between the third lens 103 and the fourth lens 104. The aperture stop ST may be positioned around the perimeter between the sensor-side sixth surface S6 of the third lens 103 and the object-side seventh surface S7 of the fourth lens 104. The aperture stop ST may be positioned around the perimeter of the object-side surface or the sensor-side surface of the optical filter 155. The aperture stop ST may be positioned around the perimeter between the third lens 103 and the optical filter 155. The aperture stop ST may be positioned around the perimeter of the object-side surface FS1 of the optical filter 155. The lens surface on which the aperture stop ST is positioned, i.e., the sixth surface S6, can more efficiently control and guide the amount of light of the optical system 100. As in the embodiment, the aperture stop ST may be positioned on the sensor-side surface of the third lens 103. Alternatively, the aperture stop ST may be positioned around the object-side surface or sensor-side surface of the second lens 102. Alternatively, at least one lens selected among the plurality of lenses, such as the object-side surface or sensor-side surface of the third lens 103, may perform the function of an aperture stop.

The focal length of the third lens 103 is F3, satisfying the condition: F3 > 0. Since the third lens 103 positioned on the object side of the aperture stop ST has a positive refractive power, the third lens 103 can refract the incident light in the direction of the optical axis, and can suppress an increase in the effective diameter of the lenses on the sensor side or rear side of the third lens 103. Accordingly, the third lens 103 can prevent a decrease in the yield by weight of the optical system and promote an improvement in production efficiency. Here, the focal lengths of the fourth and fifth lenses 104 and 105 positioned on the sensor side of the aperture stop ST can have positive values, and the optical system 100 can reduce TTL within the field of view range.

Since the sensor-side sixth surface S6 of the third lens 103 has a convex shape and a radius of curvature smaller than that of the fifth surface S5, the center distance between the third lens 103 and the aperture stop ST may be smaller than the center distance between the aperture stop ST and the fourth lens 104. The effective diameter of the optical filter 155 may be larger than the effective diameter of the third lens 103. The optical filter 155 transmits the laser beam that is emitted from the transmission optical system of the LIDAR device and reflected by the subject, while blocking beams of other wavelengths. To improve the efficiency of light blocking and transmission, the optical filter 155 may be positioned closer to the third lens 103 than to the fourth lens 104.

The fourth lens 104 may have a positive (+) or negative (-) refractive power on the optical axis OA, for example, it may have a positive (+) refractive power. The fourth lens 104 may include plastic or glass materials and may be provided as glass material. The fourth lens 104 may not be injection molded. On the optical axis OA, the object-side seventh surface S7 of the fourth lens 104 may have a convex shape, and the sensor-side eighth surface S8 may have a convex shape. The fourth lens 104 may have a convex shape on both sides. At least one or both of the seventh surface S7 and the eighth surface S8 may be spherical. The seventh and eighth surfaces S7 and S8 of the fourth lens 104 may be provided without a critical point from the optical axis OA to the end of the effective area. Alternatively, the fourth lens 104 may have a meniscus shape that is convex toward the object. Alternatively, the fourth lens 104 may have a meniscus shape that is convex toward the image sensor. Alternatively, the fourth lens 104 may have a shape that is concave on both sides on the optical axis OA.

The fifth lens 105 may have a positive (+) or negative (-) refractive power on the optical axis OA, for example, it may have a positive (+) refractive power. The fifth lens 105 may include plastic or glass materials and may be provided as glass material. The fifth lens 105 may be injection molded. On the optical axis OA, the ninth surface S9 on the object side of the fifth lens 105 may have a convex shape, and the tenth surface S10 on the sensor side may have a convex shape. The fifth lens 105 may have a shape that is convex on both sides on the optical axis OA. Alternatively, the fifth lens 105 may have a meniscus shape that is convex toward an object or image sensor. Alternatively, the fifth lens 105 may have a shape that is concave on both sides on the optical axis OA. At least one or both of the ninth surface S9 and the tenth surface S10 may be aspherical. The aspherical coefficients of the ninth and tenth surfaces S9 and S10 may be provided as L5S9 and L5S10 of FIG. 3. The ninth surface S9 of the fifth lens 105 may be provided without a threshold point from the optical axis to the end of the effective area. The tenth surface S10 may have at least one critical point from the optical axis to the end or edge of the effective area, and the critical point may be positioned closer to the edge than to the center of the tenth surface S10. The fifth lens 105 has an aspherical shape and can guide light incident through the fourth lens 104, which is a spherical lens, to the sensing portion 151.

If the refractive index of the fifth lens 105 is Nd5, the condition may be satisfied: Nd5 < Nd3. If the Abbe number of the fifth lens 105 is Vd5, the condition may be satisfied: Vd3 < Vd5. If the refractive index of the fourth lens 104 is Nd4, the condition may be satisfied: 0.8 < Nd4/Nd5 < 1.2. The fifth lens 105 may be the aspherical lens closest to the sensing portion 151. Aberrations such as spherical aberration and chromatic aberration may be improved by a lens surface having an aspherical surface, and the effect on resolution may be controlled. Optical performance may be improved by the aspherical surface of the lens surface adjacent to the sensing portion 151, for example, by improving aberration characteristics and preventing a decrease in resolution. At least one or both of the object-side surface and the sensor-side surface of the second and fifth lenses 102 and 105 may have a free-form surface, that is, a non-rotationally symmetric surface.

The optical system 100 or sensor system may include a sensing portion 151. The sensing portion 151 can detect light that has passed through the lenses sequentially. The sensing portion 151 can detect light and convert it into an electrical signal. The sensing portion 151 obtains various information about the subject. The sensing portion 151 can detect time delay or phase difference information from incident light and, based thereon, obtain distance information to a subject, position information of a subject, depth image of a subject, etc. To this end, the sensing portion 151 includes an image sensor or a photon detector, and may include sensors such as an SPD (Synchronization photo detector), SPAD (single photon avalanche diode), or APD (Avalanche photo-diode). As another example, the sensing portion 151 may include an element capable of detecting incident light, such as a CCD (Charge Coupled Device) or CMOS (Complementary Metal Oxide Semiconductor), as an image sensor. As another example, the sensing portion may include a TDC (Time to digital converter). Here, the effective length of the sensing portion 151 is the maximum length in the diagonal direction orthogonal to the optical axis OA, and here, the number of lenses having an effective diameter greater than the effective length of the sensing portion 151 is 4 to 6, and there may be no number of lenses having an effective diameter smaller than the effective length of the sensing portion 151.

The first and third lenses 101 and 103 may be of the same material or have the same refractive index. The first and second lenses 101 and 102 may have negative power, and the third to fifth lenses 103-105 may have positive power. If the lenses having negative refractive power or power are the first lens group and the lenses having positive refractive power or power are the second lens group, the aperture stop ST and the optical filter 155 may be placed within the second lens group. The aperture stop ST and the optical filter 155 may be positioned between the spherical lens surfaces of the second lens group.

The fifth lens 105 may have a refractive index lower than that of the first to third lenses 101, 102, and 103 and may have an Abbe number higher than that of the first and third lenses 101 and 103. The Abbe number of the fifth lens 105 may be lower than that of the second lens 102. The effective diameter of the fifth lens 105 may be smaller than the effective diameter of the fourth lens 104. The effective diameter of the first lens 101 may be the largest among the lenses. The effective diameters of the second to fourth lenses 102, 103, and 104 may be larger the closer the lens is to the sensing portion 151. The effective diameter of the first lens 101 may be larger than the effective diameter of the fifth lens 105 closest to the sensing portion 151. Accordingly, the brightness of the optical system 100 may be controlled. By controlling the effective diameters of each lens 101-105, the optical system 100 can control the incident light to compensate for the degradation of optical characteristics due to resolution and temperature changes, improve chromatic aberration control characteristics, and improve the vignetting characteristics of the optical system 100.

At least two lenses may be disposed between the optical filter 155 and the sensing portion 151. The fourth and fifth lenses 104 and 105 may be disposed between the optical filter 155 and the sensing portion 151. A spherical lens and an aspherical lens may be disposed between the optical filter 155 and the sensing portion 151. The optical filter 155 may be disposed between the sensor-side sixth surface S6 of the third lens 103 and the object-side seventh surface S7 of the fourth lens 104. The optical filter 155 may be a bandpass filter that passes a laser beam in the range of 890 nm to 960 nm or 940 nm ± 10 nm. As another example, the optical filter 155 may transmit a range of 1550 nm ± 10 nm and block other wavelengths. The optical filter 155 may pass wavelengths corresponding to the laser beam transmitted from the transmission optical system of the LIDAR device and block light corresponding to the remaining ambient light. The optical filter 155 may be a bandpass filter.

The cover glass 153 is positioned between the last lens and the sensing portion 151, protects the upper part of the sensing portion 151, and can prevent a decrease in the reliability of the sensing portion 151. The cover glass 153 may be positioned between the fifth lens 105 and the sensing portion 151. The cover glass 153 may be removed. The cover glass 153 may be a protective glass.

The optical filter 155 can perform the operation of passing light of a specific wavelength and blocking the remaining light. The optical filter 155 can actively perform the filtering operation. To this end, the optical filter 155 may include an active device that responds to an external control signal to pass only light whose center wavelength is a specific wavelength and block light of other wavelengths. The control signal given to the optical filter 155 may include information regarding the center wavelength of the light to pass through the active device, where the center wavelength may correspond to the center wavelength of the light emitted from the transmission optical system. Consequently, the control signal given to the optical filter 155 is a control signal that matches the center wavelength of the light emitted from the transmission optical system with the center wavelength of the light to pass through the active device of the optical filter 155. Due to the active device included in the optical filter 155, the optical filter 155 can selectively pass only the desired light and block other noise light, including natural light. Therefore, the signal-to-noise ratio (S/N) of the LIDAR system may be increased. As an example of the active device, the optical filter may include a tunable bandpass filter. The operation method of the tunable bandpass filter may be liquid crystal or acousto-optic.

The third lens 103 is positioned on the object side of the optical filter 155 and may have a refractive index greater than that of the second lens 102 and a center thickness CT3 greater than the center thickness CT1 of the first lens 101. The fourth lens 104 is positioned on the sensor side of the optical filter 155 and may have a refractive index smaller than that of the fourth lens 104 and a center thickness CT4 greater than the center thickness CT1 of the first lens 101. The center distance CG3 between the third lens 103 and the fourth lens 104 may be greater than the thickness of the optical filter 155. The center distance CG3 between the third lens 103 and the fourth lens 104 may be the largest among the center distances between two adjacent lenses within the optical system 100. The optical filter 155 may be disposed between two lenses among the first to fifth lenses 101-105 that have a center thickness greater than that of the other lenses.

Described as an absolute value of the radius of curvature, the lens surface having the minimum radius of curvature with respect to the optical axis OA within the optical system 100 may be the fourth surface S4 of the second lens 102 or the ninth surface S9 of the fifth lens 105, for example, the fourth surface S4. Accordingly, the center distance between the first lens 101 and the second lens 102 may be increased, and the center distance between the fourth lens 104 and the fifth lens 105 may be reduced. The lens surface having the maximum radius of curvature within the optical system 100 may be the tenth surface S10 of the fifth lens 105 among the spherical surfaces. By adjusting the radius of curvature of the lenses, diffuse reflection between adjacent lens surfaces may be prevented to reduce lens ghosting, and multi-path interference (MPI) caused by lens ghosting can also be prevented. The tenth surface S10 of the fifth lens 105 has a radius of curvature of 200 mm or more, and may be 20 times or more the radius of curvature of the ninth surface S9.

In the optical system 100 of the embodiment, the sum of the refractive indices of the lenses may be greater than 5, for example, 8.0 or greater, preferably in the range of 8.0 to 12.0, and the average of the refractive indices may be in the range of 1.70 to 1.80. The sum of the Abbe numbers of each of the lenses may be 180 or less, for example, in the range of 120 to 180, and the average of the Abbe numbers may be 47 or less, for example, in the range of 23 to 47. By adjusting the glass material and refractive index of the lenses within the optical system 100, the degradation of optical performance due to temperature changes from -45 to 120 degrees may be prevented and thermal compensation may be optimized. Additionally, by adjusting the Abbe numbers of the lenses, the deviation of the spot size of the incident light may be minimized, that is, the spot diagram size may be minimized.

In the optical system 100, the sum of the center thicknesses of all lenses may be 18 mm or more, for example, in the range of 18 mm to 30 mm, and the average of the center thicknesses may be 6 mm or less, for example, in the range of 4 mm to 6 mm. The sum of the center distances between lenses on the optical axis OA may be 10 mm or more, for example, in the range of 10 mm to 20 mm, and may be smaller than the sum of the center thicknesses of the lenses. In addition, the average value of the effective diameter of each lens surface of the optical system 100 may be 20 mm or less, for example, in the range of 9 mm to 20 mm. By adjusting the thickness of each lens in the optical system 100, the degradation of optical performance due to temperature changes from -45 to 120 degrees may be prevented and thermal compensation may be optimized.

In the receiving optical system according to an embodiment of the invention, the field of view may be greater than 100 degrees, for example, in the range of 118 degrees or more to 138 degrees, preferably in the range of 128 degrees ± 10 degrees. The field of view may be a horizontal field of view. The F-number of the optical system or camera module may be 1.2 or less, for example, in the range of 0.7 to 1.2 or in the range of 0.7 to 0.9. Thus, the optical system 100 may provide a bright optical system. In addition, the relative illumination (RI) may be 85% or more, for example, 88% or more. The size (RMS) of the spot received by the receiving optical system for the LIDAR may be 15µm or less, for example, 12µm or less. That is, the condition: spot size < Pixel size may be satisfied. The diagonal length of the sensing portion 151 may be greater than 2mm and less than 20mm, for example, 6.34mm ± 0.5mm, and may be greater than the sensor height in the vertical direction. The invention may be provided as a vehicle LIDAR device that can suppress changes in the focal position due to temperature changes by stacking glass lenses and correct various aberrations by providing an aspherical lens.

Since the embodiment is a receiving optical system applied to a LIDAR device, the first lens 101 may be provided as a glass material. This is because glass material has the advantage of being resistant to scratches and not sensitive to external temperatures compared to plastic material. A glass lens is used as the first lens 101 to be placed inside a vehicle or to more effectively prevent scratches caused by foreign substances, and the object-side surface of the first lens 101 can have a convex shape to prevent external foreign substances from accumulating. The LIDAR device can detect the distance, direction, speed, temperature, material distribution, and concentration characteristics to an object during vehicle operation. Such a LIDAR device may be used for advanced driver assistance systems (ADAS). The optical system 100 according to the embodiment may further include a reflective member (not shown) for changing the path of light. The above-mentioned reflective member may be implemented as a prism that is positioned on the incident side of the first lens 101 and reflects incident light in the direction of the lenses. Hereinafter, an optical system according to an embodiment will be described in detail.

As shown in FIGS. 1 and 2, the center thickness of the first to fifth lenses 101 to 105 is denoted as CT1 to CT5, the edge thickness of the effective area of each lens is denoted as ET1 to ET5, and the center distance between two adjacent lenses is denoted as CG1 to CG4. The first to fifth lenses 101 to 105 may be satisfied the following conditions.

| | |
|---|---|
| Condition 1: CT1 < CT3 | Condition 2: CT2 < CT5 < CT4 |
| Condition 3: (CT4-CT5) < (CT3-CT2) | Condition 4: ET1 < ET3 < ET2 |
| Condition 5: ET5 < ET4 < ET3 < CT5 | |

At least one or all of the center thicknesses CT3 and CT4 of the third and fourth lenses 103 and 104 are the maximum thickness among the lenses, and the center thickness CT1 of the first lens 101 is the minimum thickness among the lenses. The maximum center thickness may be greater than 1.5 times and less than or equal to 3 times the minimum center thickness, and the difference between the maximum center thickness and the minimum center thickness may be greater than or equal to 2 mm and less than or equal to 4 mm. That is, even if the first lens made of spherical material provides a thin center thickness, optical performance may not be degraded, and the thickness of the sensor system may be slim. By adjusting the thickness of these glass lenses, thermal compensation may be provided for temperatures changing from low to high temperatures.

Regarding the center distances CG1-CG4 between adjacent lenses, the center distance CG3 between the third lens 103 and the fourth lens 104 is the largest of the center distances and is greater than the center distance CG1 between the first and second lenses 101 and 102. The center distance CG4 between the fourth and fifth lenses 104 and 105 may be the smallest of the center distances. Here, the difference between the maximum center distance and the minimum center distance may be 2 mm or more, for example, in the range of 2 mm to 4 mm. Additionally, by providing the maximum center distance between lenses to be smaller than the maximum center thickness of each lens, the optical system 100 can control the light path between the spherical lens and the aspherical lens.

Regarding the effective diameter, the lens having the maximum effective diameter may be the first lens 101. The lens surface having the maximum effective diameter is the first surface S1. The lens having the minimum effective diameter may be the second lens 102. The lens surface having the minimum effective diameter may be either the fourth surface S4 of the second lens 102 or the tenth surface S10 of the fifth lens 105, and may be 0.6 times or less of the first surface S1. The effective diameter of each of the first to fifth lenses 101-105 may be larger than the diagonal length of the effective area of the sensing portion 151.

FIG. 2 is an example of lens data for the optical system of the embodiment of FIG. 1. As shown in FIG. 2, the radius of curvature at the optical axis OA, the center thickness CT of the lens, the center distance CG between the lenses, the refractive index at the d-line, the Abbe number, the effective diameter, and the focal length of the first to fifth lenses 101, 102, 103, 104, and 105 may be set. As shown in FIG. 3, the lens surfaces of the second and fifth lenses 102 and 105 among the lenses of the embodiment may include an aspherical surface having a 14th-order aspherical coefficient. For example, the object-side surface L2S1 and the sensor-side surface L2S2 of the second lens 102 and the object-side surface L5S9 and the sensor-side surface L5S10 of the fifth lens 105 may be lens surfaces having a 14th-order aspherical coefficient. As described above, an aspherical surface having a 14th-order aspherical coefficient (a non-zero value) can significantly alter the shape of the aspherical surface at the periphery, thereby allowing for good correction of the optical performance at the periphery of the field of view (FOV).

The focal lengths F1 and F2 of the first and second lenses 101 and 102 have negative refractive power, and the focal lengths F3, F4, and F5 of the third, fourth, and fifth lenses 103, 104, and 105 may have positive refractive power. The second lens 102 and the third lens 103, which are arranged adjacently, may be satisfied the following conditions.

Condition 1: Refractive index of a lens with negative refractive power < Refractive index of a lens with positive refractive power

Here, among the lenses, the second lens 102 has negative refractive power and the third lens 103 has positive refractive power. According to Condition 1, the refractive index of the third lens 103 is greater than the refractive index of the second lens 102, so the light dispersion value may be controlled. Chromatic aberration occurs in the optical system, and the second and fifth lenses 102 and 105 are used to correct the chromatic aberration.

In the invention, since the first to fifth lenses 101-105 are provided with glass material, differences in characteristics between the lenses due to temperature changes may be eliminated. That is, as the temperature changes from low to high, the lenses repeatedly contract and expand. Since lenses of the same material have the same amount of change in lens characteristics due to temperature changes, it is effective to correct chromatic aberration between lenses of the same material even if the temperature changes. For example, as shown in Table 1, it may be seen that there is almost no change in optical characteristics when the temperature of the lens barrel or optical system changes from -45°C (low temperature) to 22°C (room temperature) and 90°C (high temperature). Table 1 compares the changes in optical characteristics such as EFL, BFL, F-number (F#), TTL, and field of view (FOV) at room temperature, low temperature, and high temperature in the optical system according to the example. It may be seen that the rate of change in optical characteristics at low temperature relative to room temperature is 5% or less, e.g., 3% or less or 2% or less, and the rate of change in optical characteristics at high temperature relative to room temperature is 5% or less, e.g., 3% or less or 2% or less.

**[Table 1]**

| | Low temperature | Room temperature | High temperature | Low temperature/ Room temperature (%) | High temperature/ Room temperature (%) |
|---|---|---|---|---|---|
| EFL (mm) | 3.3509 | 3.3508 | 3.3511 | 100.00% | 100.01% |
| BFL (mm) | 6.1639 | 6.1673 | 6.1823 | 99.94% | 100.24% |
| F# | 0.8009 | 0.8009 | 0.8009 | 100.00% | 100.00% |
| TTL (mm) | 46.8528 | 46.9000 | 46.9478 | 99.90% | 100.10% |
| FOV (°) | 128.9782 | 128.9710 | 128.9398 | 100.01% | 99.98% |

In Table 1, EFL is the effective focal length of the optical system, BFL is the optical axis distance from the last lens, i.e., the fifth lens 105, to the surface of the sensing portion 151, i.e., the image sensor, F# is the F number of the optical system, TTL is the optical axis distance from the center of the object-side surface of the first lens 101 to the surface of the sensing portion 151, i.e., the imaging surface of the image sensor, and FOV is the field of view of the optical system. As shown in Table 1, it may be seen that the change in optical characteristics due to temperature changes from low temperature to high temperature, such as the rate of change of the effective focal length (EFL), TTL, BFL, F number, and FOV, is 10% or less, i.e., 5% or less, for example, in the range of 0% to 5%. This allows for a design that enables temperature compensation for the aspherical lenses even when using at least one or two or more aspherical lenses, thereby preventing a decrease in the reliability of the optical characteristics. The optical system of the embodiment disclosed above can effectively control aberration characteristics such as chromatic aberration and distortion aberration, and can provide good optical performance in the center and periphery of the FOV.

When comparing the absolute values of the focal lengths, the focal length of the third lens 103 is the maximum among the lenses and may be 20mm or more, for example, in the range of 20mm to 45mm. In addition, the focal lengths of the first and second lenses 101 and 102 may be 30mm or less, for example, in the range of 5mm to 30mm. The focal lengths of the fourth and fifth lenses 104 and 105 may be 30mm or less, for example, in the range of 5mm to 30mm. Accordingly, the optical system can have improved MTF characteristics, aberration control characteristics, resolution characteristics, etc., within the field of view range set by the optical system, and can provide good optical performance in the periphery of the field of view.

Additionally, the optical system 100 according to the embodiment may have good optical performance and set distortion characteristics in accordance with temperature changes in a temperature range from low temperature (-45 degrees) to high temperature (120 degrees). For example, the optical system 100 may be based on any one of the mapping functions of a wide-angle lens as follows. Specifically, the distance (mm) from the surface center (0 Field) of the image sensor, which is the sensing portion 151, to the 1 Field is set as ImgH, that is, ImgH is half the maximum diagonal length (mm) of the effective area of the image sensor. When the half-field of view (HFOV) is θ and the total focal length (mm) of the optical system 100 is defined as F, the mapping function of the wide-angle or fisheye optical system may be defined as follows. equidistance mapping may be defined as ImgH = F*θ, and equal area (Equisolid angle) mapping may be defined as ImgH = 2*F*sin(θ/2). Additionally, orthographic mapping may be defined as ImgH = F*sinθ, and stereographic mapping may be defined as ImgH = 2*F*tan(θ/2). Here, * indicates multiplication.

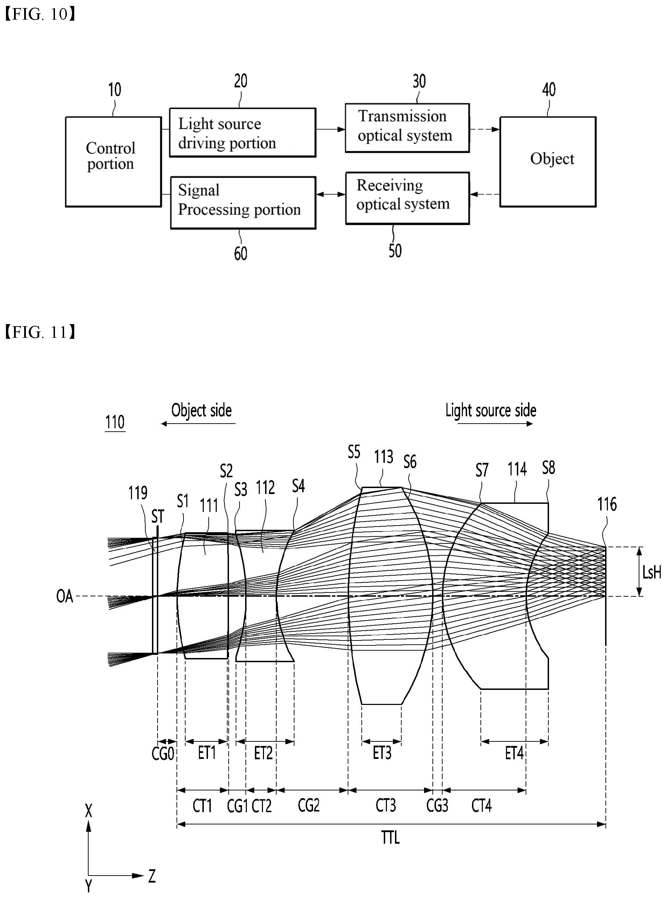

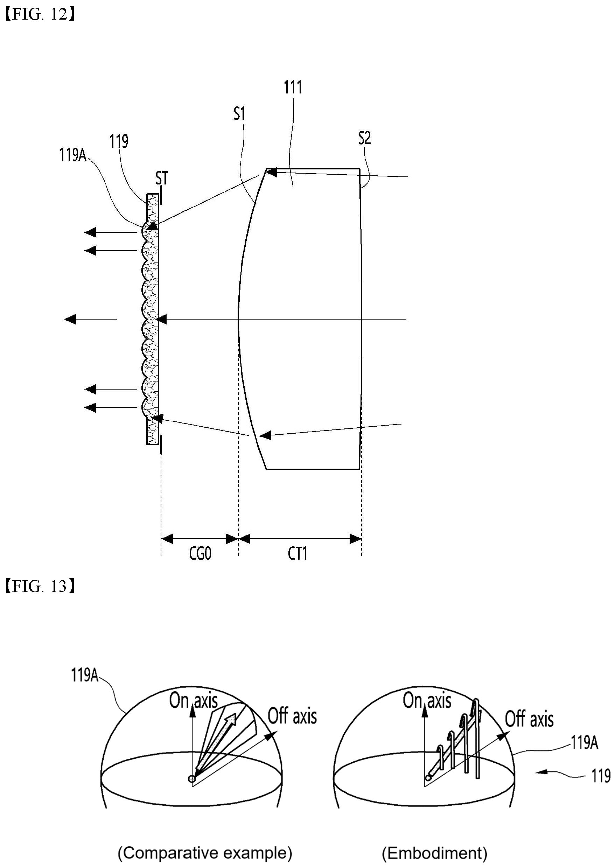

To describe the transmission optical system 110 of FIG. 11 and FIG. 13, the diffuser 119 of the transmission optical system 110 has a microlens array, and the optical path of light passing through the microlens array causes a change in Field of Illumination (FOI) in an on-axis direction separate from the direction of light propagation. A comparative example shows that after passing through a one-dimensional microlens array, a change in FOI occurs in an off-axis direction. Here, when describing the optical path after passing through the diffuser 119, the comparative example has an optical path of F*θ, while the embodiment has an optical path of F*sinθ. That is, if the optical path in spherical coordinates is projected onto a plane to induce imaging on a SPAD, it may be seen that the condition satisfies: y=F*sinθ.

As shown in FIG. 4, the optical system 100 may possess specific distortion characteristics as the FOV increases from 0 degrees to the maximum HFOV, compared to design standards (comparative examples). For example, in an embodiment of the optical system 100, it can be observed that the resolution increases as it progresses from 0 degrees toward the maximum HFOV and the maximum Image Height (ImgH) when imaging onto the SPAD of the receiver. The system may possess distortion characteristics that satisfy a specific mapping, distinct from other examples such as stereographic, equidistance, rectilinear, or Equisolid projections. Specifically, the embodiment can satisfy distortion characteristics in comparison to the aforementioned comparative example 1.

In addition, as the FOV increases from 0 degrees to the maximum HFOV, the optical system 100 can exhibit specific distortion characteristics compared to other examples, thereby providing an optical system that satisfies the orthographic projection type. Here, the ratio for the distortion characteristic refers to the value of ImgH at a position of a specific HFOV and may mean calculated by the formula: ((Other Example - Embodiment) / Embodiment * 100). Accordingly, the optical system according to the embodiment can prevent changes in optical characteristics due to temperature changes in a temperature range from low temperature (-45 degrees) to high temperature (120 degrees) based on an equal area mapping method, and can have improved optical performance in various temperature ranges.

FIG. 5 is a graph showing the modulation transfer function (MTF) of the diffraction at low, room, and high temperatures in the optical system of FIG. 1, and represents the modulation of luminance according to spatial frequency. As shown in FIG. 5, in an embodiment of the invention, the deviation of the MTF from low or high temperatures relative to room temperature may be less than 10%, i.e., 7% or less. Here, each MTF curve was measured in increments of 0.302 mm from 0.000 mm to 3.024 mm.

FIGS. 6 to 8 are graphs showing the aberration characteristics at low, room, and high temperatures in the optical system of FIG. 1. The aberration graphs in FIGS. 6 to 8 show longitudinal spherical aberration, astigmatic field curves, and distortion measured from left to right. The X-axis represents focal length (mm) and distortion (%), and the Y-axis represents image height. Additionally, the graph for longitudinal spherical aberration is for light in wavelength bands of approximately 930 nm, approximately 940 nm, and approximately 950 nm, while the graphs for astigmatic field curves and distortion are for light in wavelength bands of approximately 940 nm. In the aberration graphs in FIGS. 6 to 8, it may be interpreted that the closer each curve at low temperature, room temperature, and high temperature is to the Y-axis, the better the aberration correction function. That is, the optical system 100 according to the embodiment has improved resolution and can provide good optical performance in the center and periphery of the FOV. Here, the low temperature is -20 degrees or lower, for example, in the range of -20 to -50 degrees; the room temperature is 22 degrees ± 5 degrees or 18 degrees to 27 degrees; and the high temperature is 85 degrees or higher, for example, in the range of 85 degrees to 120 degrees. Accordingly, in the graphs of FIGS. 6 to 8, it may be seen that the decrease in luminance modulation from low temperature to high temperature is less than 10%, for example, 5% or less, or hardly changes.

The receiving optical system according to the embodiment of the invention can prevent the degradation of optical performance from low temperature to high temperature by considering the characteristics of the optical system for vehicles. For example, after designing a lens at room temperature, the value of dn/dt, which is the coefficient of change of refractive index by temperature, is assembled by considering the power combination of each lens, and the defocus for the thickness variable according to the value of the temperature coefficient (dn/dt) according to the refractive index of the lens and the low temperature, room temperature, and high temperature may be set to ±6.5µm or less. To this end, the first, third, and fourth lenses 101, 103, and 104 are made of spherical glass material, and the second and fifth lenses 102 and 105 are made of aspherical glass material. The conventional filter is disposed between the sensing portion and the last lens. An embodiment of the invention may position the optical filter 155 close to the aperture stop ST, that is, between the aperture stop ST and the fourth lens 104. Accordingly, the angle of incidence of light incident on the optical filter 155 may be minimized. That is, the angle of incidence of the main beam incident on the optical filter 155 may be less than 25 degrees at most.

This overcomes the material limitation in which the range of filter transmittance is shifted depending on the angle of incidence incident on the optical filter 155. For example, when a conventional filter is disposed between the sensing portion and the last lens, the angle of incidence of the main beam incident on the filter is approximately 45 degrees, but the optical filter 155 of the invention is placed around the aperture stop ST, so the angle of incidence of the main beam may be less than 25 degrees. When considering the transmittance curve when the main beam is incident at an angle of 0 degrees and the transmittance curves when it is incident at 20 degrees and 40 degrees on the optical filter 155, there is an effect of utilizing the filter area more widely from an angle of incidence of the main beam of 0 degrees to an angle of less than 25 degrees.

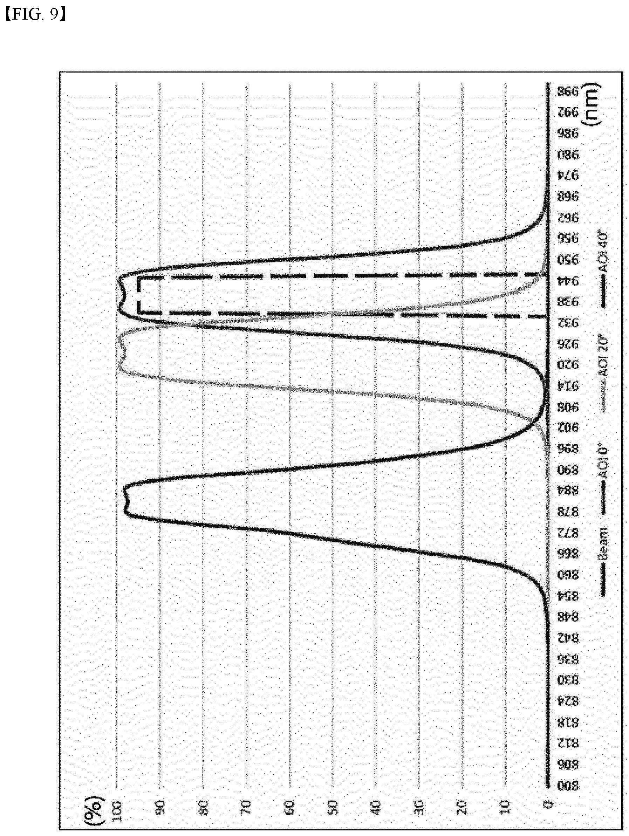

FIG. 9 is a graph showing the curves of transmittance (%) when the angles of incidence of the main beam incident on the filter of the invention is 0 degrees, 20 degrees, and 40 degrees. The angle of incidence of the main beam at the incident surface of the optical filter 155 may be inspected using automated optical inspection (AOI) equipment to determine that the angle of incidence in a different direction (±Y direction, ±X direction) from the main beam (chief ray) incident on the filter from 0 field to 1.05 field is less than 25 degrees, for example, from 0 degrees to a maximum of 24.8 degrees. Accordingly, the problem of the angle of incidence of the main beam shifting at low and high temperatures relative to room temperature may be minimized.

The optical system 100 according to the embodiment disclosed above may be satisfied at least one or two of the Mathematical expressions described below. Accordingly, the optical system 100 according to the embodiment may have improved optical characteristics. For example, if the optical system 100 satisfies at least one Mathematical expression, the optical system 100 may effectively control aberration characteristics such as chromatic aberration and distortion aberration, and may have good optical performance in the center and periphery of the FOV. In addition, the optical system 100 may have improved resolution. Also, regarding the meaning of the thickness of the lens at the optical axis OA and the distance of adjacent lenses at the optical axis OA described in the Mathematical expressions, one may refer to the embodiment disclosed above. $0 < CT 1 / CT 2 < 2$

CT1 is the center thickness of the first lens 101, and CT2 is the center thickness of the second lens 102. In Mathematical expression 1, the center thickness CT1 of the first lens 101 and the center thickness CT2 of the second lens 102 may be set to prevent a decrease in the rigidity of the first lens 101 and to control factors affecting aberrations. Preferably, Mathematical expression 1 may be satisfied: 0 < CT1 / CT2 < 1.$4 < CA 11 / CT 1 < 12$

CA11 is the effective diameter of the object-side surface S1 of the first lens 101. In Mathematical expression 2, the center thickness CT1 of the first lens 101 and the effective diameter CA11 of the object-side surface S1 of the first lens 101 may be set, and if this is satisfied, a decrease in the strength and optical properties of the glass lens may be prevented. The amount of incident light may be increased by the effective diameter of the object-side surface S1 of the first lens 101. If the value is lower than the range of Mathematical expression 2, the lens may be damaged or the incident efficiency may decrease, and if the value is greater than the range, the TTL may increase and the weight of the optical system may become heavier. Preferably, Mathematical expression 2 may be satisfied: 6 < CA11/CT1 < 10.$0 < CT 5 / CT 4 < 3$

CT4 is the center thickness of the fourth lens 104, and CT5 is the center thickness of the fifth lens 105. By setting the center thickness CT5 of the fifth lens 105 and the center thickness CT4 of the fourth lens 104 in Mathematical expression 3, thermal compensation may be optimized according to temperature changes from low to high temperatures, and the degradation of optical performance may be prevented. Preferably, Mathematical expression 3 may be satisfied: 0.5 < CT5/CT4 < 1.2.$0 < CT 5 / CT 3 < 2$

CT3 is the center thickness of the third lens 103. By setting the center thickness CT3 and CT5 of the third and fifth lenses 103 and 105 in Mathematical expression 3-1, light refracted from the object-side lenses may be guided to the sensing portion 151. Preferably, Mathematical expression 3-1 may be satisfied 0.5 < CT5/CT3 < 1. Accordingly, the fifth lens 105 closest to the sensing portion 151 can have its center thickness CT5 increased and refract light refracted through the object-side lenses to the entire area of the sensing portion 151 without significantly increasing the effective diameter.$0 < CT 5 / \left(CT1+CT2\right) < 3$

In Mathematical expression 4, the center thickness CT5 of the fifth lens 105 may be set to be greater than the sum of the center thicknesses CT1 and CT2 of the first and second lenses 101 and 102. The fifth lens 105 can refract light refracted from the object-side lenses to the entire area of the sensing portion 151. Preferably, Mathematical expression 4 may be satisfied: 0.5 < CT5/(CT1+CT2) < 1. Accordingly, the center thickness CT5 of the fifth lens 105 closest to the sensing portion 151 may be made thicker, and the effective diameter may not increase significantly.$1 < CG 3 / CT 1 < 3$

CG3 is the center distance between the third and fourth lenses 103 and 104. In Mathematical expression 5, the center distance CG3 between the third and fourth lenses 103 and 104 may be set to be greater than the center thickness CT1 of the first lens 101. Accordingly, the minimum distance between the convex sensor-side surface of the third lens 103 and the convex object-side surface of the fourth lens 104 may be provided to be greater than the thickness of the optical filter 155. Preferably, 1.2 < CC3 / CT1 < 2.2 may be satisfied.$1 < CG 1 / CG 4 < 5$

CG1 is the center distance between the first and second lenses 101 and 102, and CG4 is the center distance between the fourth and fifth lenses 104 and 105. In Mathematical expression 6, the center distance CG1 between the first and second lenses 101 and 102 may be set larger than the center distance CG4 between the fourth and fifth lenses 104 and 105 to set the center distances between adjacent spherical lenses 101 and 104 and aspherical lenses 102 and 105. Preferably, 2 < CG1 / CG4 < 4 may be satisfied.$0 < CG 4 / CG 2 < 1$

In Mathematical expression 6-1, the center distance CG2 between the second and third lenses 102 and 103 is set to be larger than the center distance CG4 between the fourth and fifth lenses 104 and 105, thereby setting the center distance between the two object-side lenses 102 and 103 relative to the aperture stop ST to be larger than the center distance between the two sensor-side lenses 104 and 105 relative to the aperture stop ST, so that the incident and exit light paths of the aperture stop ST may be controlled. Preferably, 0.1 < CG4 / CG2 < 0.5 may be satisfied.$2 < CG 3 / OFt < 15$

OFt is the thickness of the optical filter 155. In Mathematical expression 7, by making the center distance CG3 between the third and fourth lenses 103 and 104 larger than the thickness of the optical filter 155, a space may be secured in which the optical filter 155 may be installed in the area between the third and fourth lenses 103 and 104. Preferably, 5 < CG3 / OFt < 12 may be satisfied.$0 < CG 3 / \left(CT1+CG1+CT2\right) < 1$

In Mathematical expression 8, the center distance CG3 between the third and fourth lenses 103 and 104 may be set to be smaller than the optical axis distance between the object-side surface of the first lens 101 and the sensor-side surface of the second lens 102. Accordingly, the object-side surface of the first lens 101 may be set to the maximum effective diameter and the second lens 102 may be set to the minimum effective diameter. Preferably, 0.2 < CG3 / (CT1+CG1+CT2) < 0.8 may be satisfied.$1 < TTL / DF 2 < 4$

DF2 is the optical axis distance from the imaging surface of the sensing portion 151 to the optical filter 155. In Mathematical expression 8, the total optical axis length (TTL) and the optical axis distance between the optical filter 155 and the sensing portion 151 may be set. Accordingly, the position of the optical filter 155 may be positioned on the object side rather than the last lens. Preferably, 1.5 < TTL/DF2 < 3 may be satisfied.$1.70 < Nd 1$

Nd1 is the refractive index at the d-line of the first lens 101. In Mathematical expression 10, the refractive index of the first lens 101 is set high to control factors affecting the reduction of third-order aberrations (Seidel aberrations) of the optical system, and aberrations that may occur as the TTL becomes somewhat longer may be reduced. Mathematical expression 10 preferably satisfies: 1.75 < Nd1 < 2.1. If designed to be lower than the lower limit of Mathematical expression 10, performance that reduces aberrations may be obtained, but the refractive power of the first lens weakens, making it difficult to efficiently collect light, which may result in a decrease in the performance of the optical system. If designed to be higher than the upper limit of Mathematical expression 10, there is a disadvantage that it becomes difficult to obtain materials. Additionally, if the refractive index of the first lens 101 is designed to be lower than the lower limit of Mathematical expression 10, the radius of curvature of the first and second lenses may be increased to increase the refractive power of the first and second lenses.$GMn _ Aver < GLn _ Aver$

GLn_Aver is the average of the refractive index values at the d-line of the spherical glass lenses, and GMn_Aver is the average of the refractive index values at the d-line of the aspherical glass lenses that are glass molds. The spherical lenses are lenses made of glass material that are not injection molded, and the aspherical lenses are lenses made of glass material that are injection molded. Spherical lenses with high refractive indices are positioned on the object side of the aspherical lenses to increase chromatic dispersion.$0 < Nd 1 / Nd 3 < 1.5$

Nd3 is the refractive index at the d-line of the third lens 103. In Mathematical expression 11, the difference between the refractive index of the first lens 101 and the refractive index of the third lens 103 is reduced, thereby preventing a decrease in chromatic dispersion caused by the glass lenses. Preferably, in Mathematical expression 11, Nd1 and Nd3 may be the same.$0 < Nd 3 / Nd 4 < 1.5$

Nd4 is the refractive index of the fourth lens 104 at the d-line. In Mathematical expression 12, the refractive index of the third lens 103 is set higher than the refractive index of the fourth lens 104 to control chromatic dispersion caused by spherical lenses and chromatic dispersion caused by aspherical lenses. Preferably, Mathematical expression 12 may be satisfied: 0.5 < Nd3/Nd4 < 1.2.$\left(Vd4*Nd4\right) < \left(Vd2*Nd2\right)$

Nd2 is the refractive index of the second lens 102 at the d-line, and Vd2 and Vd4 are the Abbe numbers of the second and fourth lenses. In Mathematical expression 13, the product of the refractive index and Abbe number of the second lens 102 is set to be greater than the product of the refractive index and Abbe number of the fourth lens 104, thereby controlling the chromatic dispersion caused by the spherical lens and the chromatic dispersion caused by the aspherical lens.$\left(Vd3*Nd3\right) < \left(Vd5*Nd5\right)$

Nd3 and Nd5 are the refractive indices at the d-line of the third and fifth lenses 103 and 105, and Vd3 and Vd5 are the Abbe numbers of the third and fifth lenses. In Mathematical expression 13-1, the product of the refractive index and Abbe number of the fifth lens 105 is set to be greater than the product of the refractive index and Abbe number of the third lens 103, thereby allowing control over chromatic dispersion caused by spherical lenses and chromatic dispersion caused by aspherical lenses.$BFL < DF 2$

BFL is the optical axis distance from the surface of the sensing portion 151 to the center of the sensor side of the last lens, i.e., the fifth lens 105. By satisfying Mathematical expression 14, the optical filter 155 may be placed in a position adjacent to the aperture stop ST or positioned on a lens closer to the object side than the last lens. Additionally, Mathematical expression 14 may be satisfied: 3 < DF2/BFL < 7.$1 < SD / DF 2 < 1.2$

SD is the distance in the optical axis direction from the aperture stop ST to the surface of the sensing portion 151. If Mathematical expression 14-1 is satisfied, the optical filter 155 may be placed adjacent to the aperture stop ST or on the sensor side of the aperture stop ST.$BFL < CG 3 < DF 2$$CT 5 < DF 2 < TTL / 2$

In Mathematical expression 15, the optical axis distance (DF2) between the optical filter 155 and the sensing portion 151 may be set to be greater than the center thickness of the fifth lens 105 and smaller than half the value of TTL. Accordingly, the angle of incidence of the main beam incident on the optical filter 155 may be reduced to less than 25 degrees, and the problem of the angle of incidence shifting at low and high temperatures compared to room temperature may be minimized. Preferably, DF2 satisfies: 18 mm < DF2 < 25 mm.$DF 2 / DF 1$

DF1 is the optical axis distance from the center of the object-side surface of the first lens 101 to the object-side surface of the optical filter 155. When Mathematical expression 16 is satisfied, the optical filter 155 may be disposed between the lenses, between the third and fourth lenses 103 and 104, or in a position adjacent to the aperture stop ST. Accordingly, the angle of incidence of the main beam incident on the optical filter 155 may be reduced to less than 25 degrees, and the problem of the angle of incidence shifting at low and high temperatures compared to room temperature may be minimized. Preferably, 18mm < DF2 < DF1 < 25mm may be satisfied.$0.1 < OFt < CG 3$

If Mathematical expression 17 is satisfied, the optical filter 155 may be disposed between the third and fourth lenses.$1 < CA 11 / CA 21 < 5$

CA11 represents the effective diameter of the first surface S1 of the first lens 101, and CA21 represents the effective diameter of the third surface S3 of the second lens 102. If Mathematical expression 18 is satisfied, the optical system 100 can control the incident light and set factors affecting aberrations, and preferably, 1 < CA11 / CA21 < 2.5 may be satisfied.$1 < CA 11 / CA 12 < 2$

CA12 represents the effective diameter of the second surface S2 of the first lens 101. If Mathematical expression 18-1 is satisfied, the amount of incident light is increased, and the increase in the effective diameter of the second lens may be suppressed. Preferably, 1.2 < CA11 / CA12 < 1.8 may be satisfied. $0 < CA 22 / CA 31 < 1.5$

CA22 represents the effective diameter of the fourth surface S4 of the second lens 102, and CA31 represents the effective diameter of the fifth surface S5 of the third lens 103. If Mathematical expression 19 is satisfied, the optical system 100 can control the incident light path and set the sensor-side surface of the second lens 102 to a concave shape. Preferably, Mathematical expression 19 may be satisfied: 0.5 < CA22 / CA31 < 1.$0.5 < CA 42 / CA 51 < 2$

CA42 represents the effective diameter of the eighth surface S8 of the fourth lens 104, and CA51 represents the effective diameter of the ninth surface S9 of the fifth lens 105. If Mathematical expression 20 is satisfied, the optical system 100 can set an optical path incident to the sensing portion 151 through the fourth lens 104 and the fifth lens 105. Preferably, Mathematical expression 20 may be satisfied: 1 < CA42 / CA51 < 1.5.$1 < CA 11 / CA 52 < 5$

CA52 represents the effective diameter of the 10th surface S10 of the fifth lens 105. If the optical system 100 satisfies Mathematical expression 21, the incident light from the first lens 101 may be increased, and a light path toward the sensing portion 151 may be established through the fifth lens 105. Mathematical expression 21 can preferably satisfy: 1 < CA11 / CA52 < 2.5.$0 < CG 2 / \left(CT2+CT3\right) < 1$

CG2 is the center distance between the second and third lenses, and CT2 and CT3 are the center thicknesses of the second and third lenses. If Mathematical expression 22 is satisfied, the radius of curvature of the sensor-side surface of the second lens 102 may be set, and the optical path between the second and third lenses 102 and 103 may be set. Preferably, 0.2 < CG2 / (CT2+CT3) < 0.6 may be satisfied.$0 < CG 4 / \left(CT4+CT5\right) < 1$

If Mathematical expression 23 is satisfied, the optical path according to the center distance between the fourth and fifth lenses 104 and 105 may be set. Preferably, 0 < CG4 / (CT4+CT5) < 0.5 may be satisfied.$2 < CG_max / CG 4 < 5$

CG_max represents the maximum center distance among the lenses in the optical system. If Mathematical expression 24 is satisfied, the maximum center distance between the lenses is positioned closer to the object than the center distance between the fourth lens 104 and the fifth lens 105, thereby suppressing an increase in the size of the fourth lens 104. Preferably, 3 < CG_max / CG4 < 4 may be satisfied.$1 < CT 5 / BFL < 2$

If Mathematical expression 25 is satisfied, the incident light may be transmitted to the entire area of the sensing portion 151 by the fifth lens 105. Preferably, 1 < CT5 / BFL < 1.5 may be satisfied.$0 < CG 3 / CT 5 < 1$

If Mathematical expression 26 is satisfied, the effective diameter of the fifth lens 105 may be adjusted. Preferably, 0.5 < CG3 / CT5 < 1 may be satisfied.$0 < CG 4 / CT 5 < 1$

If Mathematical expression 27 is satisfied, the effective diameter of the fifth lens 105 may be adjusted, and aberration characteristics may be improved in the center and periphery of the sensing portion 151. Preferably, 0 < CG4 / CT5 < 0.5 may be satisfied.$20 < \left|L5R2\right| / CT 5 < 70$

L5R2 is the radius of curvature of the sensor-side surface of the fifth lens. If Mathematical expression 28 is satisfied, the refractive power of the fifth lens 105 may be controlled, and optical performance may be improved. Preferably, 30 < |L5R2| / CT5 < 60 may be satisfied.$10 < \left|L5R2\right| / L 5 R 1 < 40$

L5R1 is the radius of curvature of the object-side surface of the fifth lens. If Mathematical expression 29 is satisfied, the refractive power of the fifth lens 105 may be controlled and optical performance improved. Preferably, 20 < |L5R2| / L5R1 < 30 may be satisfied.$1 < L 1 R 1 / L 1 R 2 < 5$

L1R1 is the radius of curvature of the object-side surface of the first lens, and L1R2 is the radius of curvature of the sensor-side surface of the first lens. If Mathematical expression 30 is satisfied, the refractive power of the first lens 101 may be controlled and optical performance improved. Preferably, 2 < L1R1 / L1R2 < 5 may be satisfied.$5 < L 2 R 1 / L 2 R 2 < 20$

L2R1 is the radius of curvature of the object-side surface of the second lens, and L2R2 is the radius of curvature of the sensor-side surface of the second lens. If Mathematical expression 31 is satisfied, the refractive power of the second lens 102 may be controlled and optical performance improved, and the effective diameter of the sensor-side lenses of the second lens 102 may be adjusted. Preferably, 5 < L2R1 / L2R2 < 15 may be satisfied.$1 < CT_max / CG_max < 2$

In Mathematical expression 32, the maximum center thickness (CT_Max) among the lenses and the maximum distance (CG_Max) between adjacent lenses may be set. If Mathematical expression 32 is satisfied, the optical system can provide good optical performance at the focal length of the set field of view and can reduce TTL. Preferably, 1 < CT_Max / CG_Max < 1.5 may be satisfied.$1 < ΣCT / ΣCG < 3$

ΣCT is the sum of the center thicknesses of the lenses, and ΣCG is the sum of the distances between adjacent lenses. If Mathematical expression 33 is satisfied, the optical system can provide good optical performance at the focal length of the set field of view and can reduce TTL. Preferably, 1.2 < ΣCT / ΣCG < 2.2 may be satisfied.$5 < ΣNd < 15$

ΣNd represents the sum of the refractive indices at the d-line of each of the multiple lenses. If Mathematical expression 34 is satisfied, the TTL may be controlled in an optical system 100 in which an aspherical lens and a spherical lens are mixed, and improved resolution may be achieved. Additionally, if the number of spherical lenses is greater than the number of aspherical lenses, the sum of the TTL and refractive indices may be set. Mathematical expression 34 preferably satisfies: 7 < ΣNd < 9.$10 < ΣVd / ΣNd < 50$

ΣVd represents the sum of the Abbe numbers of each of the multiple lenses. If Mathematical expression 35 is satisfied, the optical system 100 can have improved aberration characteristics and resolution. Mathematical expression 35 sets the sum of the Abbe numbers and refractive indices of the lenses to control optical characteristics, and preferably satisfies: 13 < ΣVd / ΣNd < 23.$50 < ΣCT * n < 159$

ΣCT is the sum of the center thicknesses of multiple lenses, and n is the number of lenses in the optical system. If Mathematical expression 36 is satisfied, TTL may be controlled. Preferably satisfies: 100 < ΣCT*n < 135.$1 < CA 11 / CA _ Min < 4$

CA_Min represents the minimum effective diameter among the object-side surfaces and sensor-side surfaces of the lenses. If Mathematical expression 37 is satisfied, the optical system can provide a slimmer module while controlling incident light and maintaining optical performance. Mathematical expression 38 preferably satisfies: 1 < CA11 / CA_Min < 3. Here, CA11 may be the maximum effective diameter, and the tenth surface S10 of the fifth lens 105 may have the minimum effective diameter.$CA 3 < D _ OF / CA 4 < 4$

CA3 is the average of the effective diameters of the object-side and sensor-side surfaces of the third lens, D_OF is the effective diameter of the optical filter, and CA4 is the average of the effective diameters of the object-side and sensor-side surfaces of the fourth lens. If Mathematical expression 38 is satisfied, the incident light may be transmitted through the third lens, the optical filter, and the fourth lens.$0.5 < CA _ Max / DF 2 < 1.5$

If Mathematical expression 39 is satisfied, the position of the optical filter 155 may be set based on the maximum effective diameter. Preferably, 0.6 < CA_max / DF2 < 1.3 may be satisfied.$0.3 < CA _ Min / DF 2 < 1$

Mathematical expression 40 sets the minimum effective diameter of the lens surface and the position of the optical filter, thereby reducing TTL. Preferably, 0.3 < CA_Min / DF2 < 0.8 may be satisfied.$1 < CA _ max / \left(2*ImgH\right) < 5$

Mathematical expression 41 may be set using the maximum effective diameter CA_Max and the diagonal length (2*ImgH) of the sensing portion. If this is satisfied, the optical system can maintain good optical performance, and a slim and compact sensor device may be configured. Preferably, Mathematical expression 41 may be satisfied: 2 < CA_max / (2*ImgH) < 4.3.$1 < TD / CA _ Max < 4$

TD is the optical axis distance from the center of the object-side surface of the first lens to the center of the sensor-side surface of the last lens. If Mathematical expression 42 is satisfied, the total optical axis distance and maximum effective diameter of the lenses may be set, thereby allowing for the setting of a size for good optical performance. Mathematical expression 42 can preferably satisfy: 1.5 < TD / CA_Max < 2.2.$SD < TD$

The SD is the optical axis distance from the position of the aperture to the surface of the sensing portion. Preferably, the condition may be satisfied: 2 < TD/SD < 2.5.$0 < F / L 5 R 2 < 0.5$

F is the effective focal length of the optical system, and L5S2 is the radius of curvature of the sensor-side surface of the fifth lens. If Mathematical expression 43 is satisfied, the effective focal length and the radius of curvature of the sensor-side surface of the last aspherical lens are set, allowing for the control of the reduction of the optical system, such as its impact on the TTL. Mathematical expression 43 preferably satisfies: 0 < F / L5R2 < 0.2.$0 < F / L 1 R 1 < 0.5$

In Mathematical expression 44, the effective focal length of the optical system and the radius of curvature of the object-side surface of the first lens are set to control the effect on incident light and TTL. Mathematical expression 44 preferably satisfies: 0 < F / L1R1 < 0.25.$0 < EPD / \left|L5R2\right| < 0.5$

EPD refers to the size of the entrance pupil diameter of the optical system 100. If the optical system 100 according to the embodiment satisfies Mathematical expression 45, the optical system 100 can control incident light. Preferably, the condition may be satisfied: 0 < EPD / |L5R2| < 0.2.$0 < EPD / L 1 R 1 < 0.5$

In Mathematical expression 46, the size of the entrance pupil diameter of the optical system 100 and the radius of curvature of the object-side surface of the first lens may be set, and if this is satisfied, the optical system 100 can control incident light. Preferably, the condition may be satisfied: 0 < EPD / L1R1 < 0.2.$0 < \left|F1/F2\right| < 5$

F1 is the focal length of the first lens, and F2 is the focal length of the second lens. If Mathematical expression 47 is satisfied, the refractive power of the first and second lenses may be controlled to improve resolution, and TTL and EFL may be affected. Preferably, the condition may be satisfied: 1 < |F1 / F2| < 2, or the condition may be satisfied: |F2| < |F1|.$0 < \left|F1\right| / F < 10$

In Mathematical expression 48, the focal length of the first lens and the effective focal length of the optical system may be set, and the refractive power of the first lens may be controlled to improve resolution. Preferably, 0 < |F1| / F < 5 may be satisfied.$0 < \left|F1/F5\right| < 10$

In Mathematical expression 49, the focal lengths of the first and fifth lenses may be set, and the refractive power of the first and fifth lenses may be controlled to improve resolution. Preferably, 1 < |F1 / F5| < 2 may be satisfied.$\left|F1\right| < F 4$$F 4 < F 3$$F 5 < F 4$

In Mathematical expressions 49-1 to 49-3, F1, F2, F3, F4, and F5 are the focal lengths of the first to fifth lenses, and light may be guided to the effective area of the aspherical lens by adjusting the focal length from the spherical lens to the last aspherical lens. The balance of the focal lengths of each of the lenses can suppress differences in focus position caused by temperature changes. Accordingly, the degradation of the optical characteristics of the imaging lenses due to temperature changes may be suppressed.

Here, the aperture stop ST is disposed on the sensor-side surface of the third lens 103. The focal length of the lens disposed closer to the sensor than the aperture stop ST and positioned most adjacent to it is greater than zero. In an embodiment of the present invention, the focal length F3 of the third lens 103 must be designed to be greater than zero (F3 > 0). In this case, since the third lens 103 converges light, it is possible to prevent the effective diameter of the fourth and fifth lenses, which are lenses positioned closer to the sensor than the third lens 103, from increasing, and to prevent the TTL from increasing, thereby enabling the miniaturization of the optical system. Consequently, a wide-angle optical system can be provided with the FOV exceeding 100 degrees, for example, in the range of 110 to 130 degrees.$0 < \left|F1/F4\right| < 2$

F1 is the refractive power value of the first lens, and F4 is the refractive power value of the fourth lens. That is, the refractive powers of the first and fourth lenses are opposite to each other, so aberrations may be improved and light may be effectively guided with an aspherical lens. When the condition satisfies: F1 * F4 < 0, the improvement effect on chromatic aberration in the two lenses is not significant.$20 mm < TTL < 60 mm$

TTL (Total track length) refers to the distance (mm) along the optical axis OA from the center of the first surface S1 of the first lens 101 to the imaging surface of the sensing portion 151. By setting TTL in Mathematical expression 51, an optical system for vehicles may be provided. Mathematical expression 51 preferably satisfies: 30mm < TTL < 55mm.$2 mm < ImgH < 20 mm$

Mathematical expression 52 can set the diagonal size of the sensing portion 151 and can provide an optical system compatible with the vehicle sensor size. Mathematical expression 52 can preferably satisfy: 2mm < ImgH < 5mm.$3 mm < BFL < 7 mm$

By setting the BFL (Back focal length) in Mathematical expression 53, the installation space for the cover glass 153 may be secured, and the assembly of components and coupling reliability may be improved through the distance between the sensing portion 151 and the last lens. Mathematical expression 53 can preferably satisfy: 3.5mm < BFL < 5.5mm. If the BFL is less than the range of Mathematical expression 53, some light proceeding to the sensing portion may not be transmitted to the sensing portion, which may cause a decrease in resolution. If the BFL exceeds the range of Mathematical expression 53, stray light may be introduced, and the aberration characteristics of the optical system may be degraded.$1 mm < F < 10 mm$

Mathematical expression 54 can set the total focal length (F) to suit the automotive optical system. Mathematical expression 54 may be satisfied: 1mm < F < 5.5mm.$100 degrees < FOV$

In Mathematical expression 55, FOV refers to the field of view (Degree) of the optical system 100, and can provide an automotive optical system having FOV exceeding 100 degrees. Preferably, the FOV may be satisfied: 110 ≤ FOV ≤ 130.

In Mathematical expression 55, the range of the automotive optical system may be set by the field of view. The sensor length in the horizontal direction is based on 6.04mm ± 0.5mm. Additionally, if Mathematical expression 55 is satisfied, the rate of change of the effective focal length and the rate of change of the field of view when the temperature changes from room temperature to high temperature may be set to 5% or less, for example, 0 to 5%. Furthermore, even if two or more aspherical lenses are used in combination with spherical lenses within the optical system 100, the degradation of optical characteristics may be prevented through temperature compensation and aberration correction by the aspherical lenses made of glass material. $1 < TTL / CA_max < 7$

Mathematical expression 56 establishes the relationship between the total optical axis length of the optical system and the maximum effective diameter, thereby providing an improved automotive optical system. Mathematical expression 56 preferably satisfies: 1 < TTL / CA_max < 3.$10 < TTL / ImgH < 30$

Mathematical expression 57 can set the total optical axis length (TTL) of the optical system and the diagonal length (ImgH) from the center of the sensing portion 151. If the optical system 100 according to the embodiment satisfies Mathematical expression 57, the optical system 100 can have a TTL for application to the vehicle sensing portion 151, thereby providing improved image quality. Preferably, Mathematical expression 57 may be satisfied: 10 < TTL / ImgH < 20.$1 < BFL / ImgH < 2$

Mathematical expression 58 can set the optical axis distance between the sensing portion 151 and the fifth lens 105 and the diagonal length from the center of the sensing portion 151. If the optical system 100 according to the embodiment satisfies Mathematical expression 58, the optical system 100 can secure a BFL for applying the size of the vehicle sensing portion 151, set the distance between the fifth lens 105 and the sensing portion 151, and have good optical characteristics at the center and periphery of the FOV. Preferably, Mathematical expression 58 may be satisfied: 1.2 < BFL / ImgH < 1.8.$ImgH < BFL < DF 2$

The BFL may be greater than the value (ImgH) which is half the diagonal length of the sensing portion 151 and smaller than the optical axis distance from the optical filter 155 to the surface of the sensing portion 151.$4 < TTL / BFL < 15$

Mathematical expression 59 can set the total optical axis length (TTL) of the optical system and the optical axis distance (BFL) between the sensing portion 151 and the last lens. If the optical system 100 according to the embodiment satisfies Mathematical expression 59, the optical system 100 can secure BFL. Mathematical expression 59 can preferably satisfy: 8 < TTL / BFL < 12.$0 < F / TTL < 0.5$

Mathematical expression 60 can set the total focal length (F) and the total optical axis length (TTL) of the optical system 100. Accordingly, an optical system for a driver assistance system may be provided. Mathematical expression 60 can preferably satisfy: 0 < TTL/F < 0.1. When the optical system 100 according to the embodiment satisfies Mathematical expression 60, the optical system 100 can have an appropriate focal length within the set TTL range and provides an optical system capable of maintaining an appropriate focal length and forming an image even as the temperature changes from low to high temperature. If it is below the lower limit of Mathematical expression 60, it is necessary to increase the refractive power of the lenses, making it difficult to correct spherical aberration or distortion aberration; if it exceeds the upper limit of Mathematical expression 60, the effective diameter or TTL of the lenses becomes longer, which may cause a problem where the imaging lens system becomes large.$0 < F / BFL < 1$

Mathematical expression 61 can set the total focal length (F) of the optical system 100 and the optical axis distance (BFL) between the sensing portion 151 and the last lens. If the optical system 100 according to the embodiment satisfies Mathematical expression 61, the optical system 100 may have a set field of view and an appropriate focal length, and may be provided as a vehicle optical system. In addition, the optical system 100 may minimize the distance between the last lens and the sensing portion 151, thereby having good optical characteristics at the periphery of the FOV. Preferably, Mathematical expression 61 may be satisfied: 0.5 < F / BFL < 1.$0.5 < F / ImgH < 1.5$

Mathematical expression 62 may set the total focal length (F) of the optical system 100 and the diagonal length (ImgH) from the center of the sensing portion 151. Such an optical system 100 may have improved aberration characteristics in the size of the vehicle sensing portion 151. Mathematical expression 62 can preferably satisfy: 1 < F / ImgH < 1.4. $0.5 < F / EPD < 1.5$

Mathematical expression 63 can set the total focal length (F) and the entrance pupil diameter of the optical system 100. Accordingly, the total brightness of the optical system may be controlled. Mathematical expression 63 can preferably satisfy: 0.5 < F / EPD < 1.$0 < EPD / ImgH / FOV < 0.2$

Mathematical expression 64 can set the relationship between the EPD, the length of half the maximum diagonal length of the sensing portion (ImgH), and the FOV. Accordingly, the total size and brightness of the optical system may be controlled. Mathematical expression 64 can preferably satisfy: 0 < EPD/ImgH/FOV < 0.1.$100 < FOV / F # < 200$

Mathematical expression 65 establishes the relationship between the FOV of the optical system and the F-number (F#). Preferably, Mathematical expression 65 may be satisfied: 120 < FOV / F# < 170. Here, F# is provided to be 1.2 or less to provide a bright image.$40 < \left(CT_Max+CG_Max\right) * n < 140$$800 < \left(FOV*TTL\right) / n$

Preferably, depending on the FOV and the number (n) of lenses, Mathematical expression 67 may be satisfied: 1000 < (FOV*TTL)/n < 1200.$FOV < \left(TTL*n\right)$$5 < \left(TD/CA_Max\right) * n < 30$

Preferably, 8 < (TD/CA_Max)*n < 12 may be satisfied.$0 < \left(CA52/CA22\right) / \left(CA11/CA21\right) < 1.5$

In Mathematical expressions 66 to 70, n is the total number of lenses, and depending on the total number of lenses, the relationship with the maximum center thickness CT_Max of the lenses, maximum center distance CG_Max, FOV, TTL, optical axis distance (TD) of the lenses, the effective diameter CA52 of the sensor-side surface of the fifth lens, the effective diameter CA11 of the object-side surface of the first lens, and the effective diameters CA21 a nd CA22 of the object-side and sensor-side surfaces of the second lens may be established. Accordingly, chromatic aberration, resolution, size, etc., of an optical system having six or fewer lenses may be controlled.$Z = \frac{{cY}^{2}}{1 + \sqrt{1 - \left(1+K\right) {c}^{2} {Y}^{2}}} + {AY}^{4} + {BY}^{6} + {CY}^{8} + {DY}^{10} + {EY}^{12} + {FY}^{14} + ⋯$

In Mathematical expression 71, Z may represent Sag, which is the distance in the direction of the optical axis from any position on the aspherical surface to the vertex of the aspherical surface. Y may represent the distance in the direction perpendicular to the optical axis from any position on the aspherical surface to the optical axis. c may represent the curvature of the lens, and K may represent the conic constant. Additionally, A, B, C, D, E, and F may represent aspheric constants from the 4th to the 14th order.

An optical system 100 according to an embodiment may be satisfied at least one or two of Mathematical expressions 1 to 70. In this case, the optical system 100 may have improved optical characteristics. Specifically, if the optical system 100 satisfies at least one of Mathematical expressions 1 to 35 and/or at least one of Mathematical expressions 36 to 70, the optical system 100 may have improved resolution and improve aberration and distortion characteristics. In addition, the optical system 100 can secure a back focal length (BFL) for applying a vehicle sensing portion 151, compensate for the degradation of optical characteristics due to temperature changes, and minimize the distance between the last lens and the sensing portion 151, thereby enabling good optical performance in the center and periphery of the FOV.

Table 2 relates to the items of the Mathematical expressions described above in the optical system 100 of the embodiment, and concerns the TTL, BFL, F, ImgH, effective diameter, sum of the center thicknesses of each lens, sum of the center distances between adjacent lenses, sum of Abbe numbers, sum of refractive indices, TD which is the optical axis distance from the first surface S1 to the tenth surface S10, focal lengths F1, F2, F3, F4, and F5 of each of the first to fifth lenses, field of view (degrees), edge thickness (ET), F number, etc. of the optical system 100.

**[Table 2]**

| Items | Values | Items | Values |
|---|---|---|---|
| F(EFL) | 3.351 | ET1 | 3.674 |
| F1 | -17.776 | ET2 | 6.654 |
| F2 | -11.933 | ET3 | 5.145 |
| F3 | 31.811 | ET4 | 3.505 |
| F4 | 19.897 | ET5 | 3.061 |
| F5 | 13.659 | FOV | 128.971 |
| ∑Nd | 8.752 | EPD | 4.184 |
| ∑Vd | 150.790 | BFL | 4.436 |
| ∑CT | 25.384 | TD | 40.727 |
| ∑CG | 14.843 | ImgH | 3.024 |
| TTL | 45.163 | SD | 18.307 |
| F-number | 0.801 | | |

Table 3 shows the result values for the Mathematical expressions 1 to 35 in the optical system 100 of the embodiment. Referring to Table 3, it may be seen that the optical system 100 satisfies at least one, two or more, or three or more of Mathematical expressions 1 to 35. Specifically, it may be seen that the optical system 100 according to the embodiment satisfies all of the Mathematical expressions 1 to 35. Accordingly, the optical system 100 can provide good optical performance and excellent optical characteristics at the center and periphery of the FOV.

**[Table 3]**

| Mathematical expressions | | Values |
|---|---|---|
| 1 | 0 < CT1 / CT2 < 2 | 0.556 |
| 2 | 4 < CA11 / CT1 < 12 | 8.740 |
| 3 | 0 < CT5 / CT4 < 3 | 0.965 |
| 4 | 0 < CT5 / (CT1+CT2) < 3 | 0.855 |
| 5 | 1 < CG3 / CT1 < 3 | 1.885 |
| 6 | 1 < CG1 / CG4 < 5 | 3.135 |
| 7 | 2 < CG3 / OFt < 15 | 9.419 |
| 8 | 0.5 < CG3 / (CT1+CG1+CT2) < 1.5 | 0.412 |
| 9 | 1 < TTL/DF2 < 4 | 2.126 |
| 10 | 1.60 < Nd1 | 1.816 |
| 11 | 0 < Nd1/Nd3 <1.5 | 1.000 |
| 12 | 0 < Nd3/Nd4 <1.5 | 1.088 |
| 13 | (Vd2*Nd2) < (Vd1*Nd1) | Satisfaction |
| 14 | BFL < DF2 | Satisfaction |
| 15 | CT5 < DF2 < TTL/2 | Satisfaction |
| 16 | DF2 < DF1 | Satisfaction |
| 17 | 0.1 < Opt < CG3 | Satisfaction |
| 18 | 1 < CA11 / CA21 < 5 | 1.700 |
| 19 | 0 < CA22 / CA31 < 1.5 | 0.923 |
| 20 | 0.5 < CA42 / CA51 < 2 | 1.200 |
| 21 | 1 < CA11/CA52 < 5 | 2.069 |
| 22 | 0 < CG2 / (CT2+CT3) < 1 | 0.401 |
| 23 | 0 < CG4 /(CT4+CT5) < 1 | 0.116 |
| 24 | 2 < CG_max / CG4 < 5 | 3.339 |
| 25 | 1 < CT5 / BFL < 2 | 1.349 |
| 26 | 0 < CG3 / CT5 < 1 | 0.787 |
| 27 | 0 < CG4 / CT5 < 1 | 0.236 |
| 28 | 20 < \|L5R2\| / CT5 < 70 | 41.781 |
| 29 | 10 < \|L5R2\| / L5R1 < 40 | 26.821 |
| 30 | 1 < L1R1/L1R2 < 5 | 3.188 |
| 31 | 5 < L2R2/L2R1 <20 | 10.677 |
| 32 | 1 < CT_Max / CG_Max < 2 | 1.316 |
| 33 | 1 < ∑CT / ∑CG < 3 | 1.710 |
| 34 | 5 < ∑Nd <15 | 8.752 |
| 35 | 10 < ∑Vd / ∑Nd <50 | 17.229 |

Table 4 shows the result values for the above-described Mathematical expressions 36 to 70 in the optical system 100 of the embodiment. Referring to Table 4, it may be seen that the optical system 100 satisfies at least one, two or more, or three or more of Mathematical expressions 36 to 70. Specifically, it may be seen that the optical system 100 according to the embodiment satisfies all of the Mathematical expressions 1 to 70. Accordingly, the optical system 100 can provide good optical performance and excellent optical characteristics at the center and periphery of the FOV.

**[Table 4]**

| Mathematical expressions | | Values |
|---|---|---|
| 36 | 50 < ∑CT*n < 159 | 126.918 |
| 37 | 1 < CA11 / CA_min < 4 | 2.101 |
| 38 | CA3 < D_OF < CA4 | Satisfaction |
| 39 | 0.5 < CA_max / DF2 < 1.5 | 1.029 |
| 40 | 0.3 < CA_min / DF2 < 1 | 0.490 |
| 41 | 1 < CA_max / (2*ImgH) < 5 | 3.613 |
| 42 | 1 < TD / CA_Max < 4 | 1.864 |
| 43 | 0 < F / \|L5R2\| < 0.5 | 0.013 |
| 44 | 0 < F / L1R1 < 0.5 | 0.112 |
| 45 | 0 < EPD / \|L5R2\|< 0.5 | 0.017 |
| 46 | 0 < EPD / L1R1 < 0.5 | 0.139 |
| 47 | 0 < \|F1 / F2\| < 5 | 1.490 |
| 48 | 1 < \|F1\| / F < 10 | 5.305 |
| 49 | 0 < \|F1 / F5\| < 10 | 1.301 |
| 50 | 0 < \| F1/F4\| <2 | 0.893 |
| 51 | 20 < TTL < 60 | 45.163 |
| 52 | 2 < ImgH < 20 | 3.024 |
| 53 | 3 < BFL < 7 | 4.436 |
| 54 | 1 < F < 10 | 3.351 |
| 55 | 100 < FOV < 150 | 128.971 |
| 56 | 1 < TTL / CA_max < 7 | 2.067 |
| 57 | 10 < TTL / ImgH < 30 | 14.935 |
| 58 | 1 < BFL / ImgH < 2 | 1.467 |
| 59 | 4 < TTL / BFL < 15 | 10.181 |
| 60 | 0 < F / TTL < 0.5 | 0.074 |
| 61 | 0 < F / BFL < 1 | 0.755 |
| 62 | 0.5 < F / ImgH < 1.5 | 1.108 |
| 63 | 0.5 < F / EPD < 1.5 | 0.801 |
| 64 | 0 < EPD/Imgh/FOV < 0.2 | 0.011 |
| 65 | 100 < FOV / F# <200 | 161.033 |
| 66 | 40 < (CT_Max+CG_Max)*n < 140 | 54.560 |
| 67 | 800 < (FOV*TTL)/n | 1164.941 |
| 68 | FOV < (TTL*n) | Satisfaction |
| 69 | 5 < (TD / CA_max) *n < 30 | 9.320 |
| 70 | 0 < (CA52/CA22) / (CA11/CA21) < 1.5 | 0.597 |

FIG. 10 is a block diagram of a sensor system having a transmitting/receiving optical system according to an embodiment of the invention.

Referring to FIG. 10, the sensor device includes a control portion 10, a light source driving portion 20, a transmission optical system 30, the receiving optical system 50 disclosed above, and a signal processing portion 60.

The control portion 10 controls the transmission and reception signals of a signal and may be linked with devices related to communication services such as an autonomous driving module, an artificial intelligence module, a drone, a robot, an augmented reality device, a virtual reality device, and 5G and 6G based on the transmitted/received signals. The light source driving portion 20 supplies power to a light source included in the transmission optical system 30 to drive it. The light source generates a laser beam in the form of a line light source or a point light source. The light source driving portion 20 can adjust or vary the driving current supplied to the light source according to driving environment information. The driving environment information may include terrain information of the driving section, traffic congestion information, weather, etc.

The wavelength of the laser beam generated from the light source may be in the range of 890 nm to 960 nm or in the range of 940 nm ± 10 nm. As another example, the wavelength of the laser beam may be 1550 nm ± 10 nm. The laser light source may be implemented as an InGaAs/GaAs-based semiconductor diode laser and may emit a high-power laser beam. The light source may include a single emitter and/or multiple emitters. The transmission optical system 30 transmits the laser beam generated from the light source to an object 40 through a lens portion and a diffuser, and the light reflected from the object 40 is received by the receiving optical system 50. The receiving optical system 50 may be composed of a plurality of light sensors, and the light sensors convert the received light into an electrical signal using a photodiode. That is, the sensing portion is arranged in a matrix type and converts light received from objects scanned in the horizontal and vertical directions into current.

The signal processing portion 60 converts the output of the receiving optical system 50 into voltage and amplifies it, and then converts the amplified signal into a digital signal using an analog-to-digital converter. The signal processing portion 60 analyzes the digital data using a Time of Flight (TOF) algorithm or a phase-shift algorithm to detect the distance to the object 40 and the shape of the object. The control portion 10 can receive vehicle speed information and road surface condition information through a control unit (ECU) or a network. The control portion 10 can receive driving environment information through a network. The driving environment information may include terrain information of the driving section, traffic congestion information, weather, etc. The control portion 10 can adjust the gain based on one or more of the vehicle speeds, the road surface condition of the road on which the vehicle is traveling, and driving environment information, and can provide sensor data including the distance to an object and the shape information of the object to the autonomous driving device.

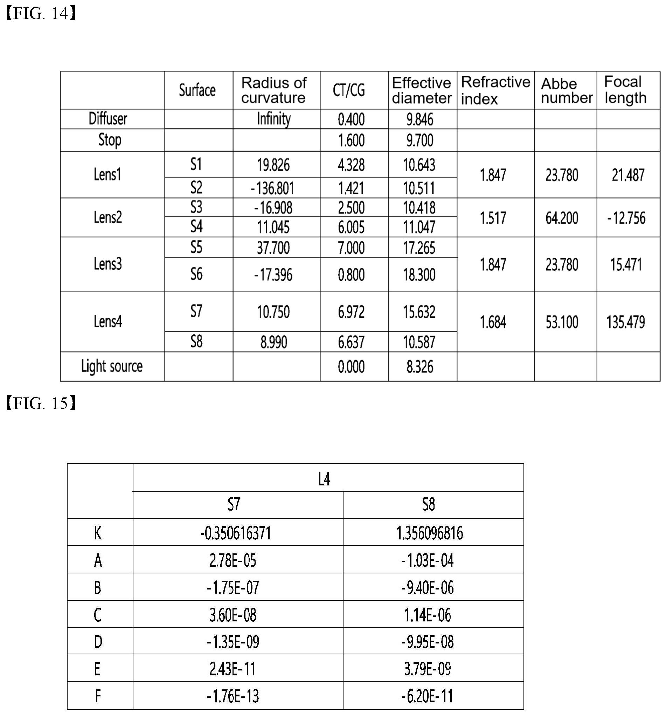

FIG. 11 is a side cross-sectional view of a transmission optical system of a LIDAR according to an embodiment, FIG. 12 is a diagram showing the first lens and diffuser of the optical system of FIG. 11, FIG. 13 is an example of an optical path through the lens array of the diffuser of a comparative example and an embodiment, and FIG. 14 is a table showing the lens characteristics of the optical system of FIG. 11.

Referring to FIG. 11, the optical system 110 and the sensor system having it may be mounted inside or outside a vehicle to monitor the driver or sense external objects or lanes. The material of each of the lenses may be selected as glass or plastic, and since the coefficient of linear expansion of each lens is smaller for glass material than for plastic material, a glass lens may be adopted to suppress changes in the focusing position due to temperature changes. However, when an optical system is constructed using spherical glass lenses, there are limitations in reducing the number of lenses, as well as limitations in reducing size and weight.

The optical system 110 is a transmission optical system and may include spherical lenses and aspherical lenses. Here, the spherical lens is a lens in which at least one of the object-side surface and the light source-side surface of the lens on the optical axis is spherical. The aspherical lens is a lens in which at least one of the object-side surface and the light source-side surface of the lens on the optical axis is aspherical. The optical system 110 may include spherical glass lenses and aspherical glass lenses. Additionally, since aspherical lenses are employed, the total length (TTL) of the optical system 110 may be reduced, and good correction for various aberrations such as spherical aberration and chromatic aberration is possible due to the aspherical lenses. Furthermore, aspherical lenses can minimize distortion in the periphery.

The optical system 110 may include n lenses, the n-th lens being the last lens adjacent to the image sensor 151, and the n-1th lens being the lens closest to the last lens. n is an integer less than or equal to 5, for example, in the range of 3 to 5. The ratio of spherical lenses to aspherical lenses among the n lenses may be either 3:1 or 2:2.

In the optical system 110, the first lens 111 closest to the object may be made of glass material. The glass material has a small amount of expansion and contraction change due to external temperature changes, and its surface is not easily scratched, thus preventing surface damage. Accordingly, the lenses adjacent to the object in the optical system 110 may be spherical lenses, and the lenses adjacent to the light source 116 may be aspherical lenses. That is, the last lens closest to the light source 116 within the optical system 110 may be an aspherical lens. In the optical system 110, the n-th lens may be positioned as an aspherical lens. The last lens may emit light from the light source 116 in various paths. The aspherical lens may be a glass mold made of injection-molded glass material. As another example, at least two lenses closest to the light source 116 may be aspherical lenses.

The lenses within the optical system 110 may be made of glass material. Since the rate of change of shrinkage and expansion due to temperature change is smaller for glass lenses than for plastic lenses, glass lenses may be positioned in the area adjacent to the outside within the lens barrel.

Each lens may have an object-side surface and a light source-side surface. The lenses may include lenses with an object-side spherical surface and a light source-side spherical surface, and lenses with an object-side aspherical surface and a light source-side aspherical surface. In the optical system 110, the number of aspherical lenses may be smaller than the number of spherical lenses. Since the optical system 110 places the aspherical lenses adjacent to the light source 116, it can provide light that is refracted in various ways. The spherical lenses may be made of glass, and the aspherical lenses may be made of glass mold material. Among the lenses of the optical system 110, the lens having the maximum refractive index may be a spherical lens, and the lens having the maximum Abbe number may be a spherical lens. Accordingly, since the lens having the maximum refractive index is placed on the object side, it is easy to change the radius of curvature of the lenses after the second lens and can increase the center thickness.

In the optical system 110, the lens having the maximum effective diameter is located closest to the aspherical lens, is made of glass, and may be a spherical lens. In the optical system 110, the lens having the minimum effective diameter may be disposed between the spherical lenses. Here, the effective diameter of the lens is the average value of the effective diameter of the object-side surface and the effective diameter of the light source-side surface of each lens. Each of the lenses 111-114 may include an effective region and an ineffective region. The effective region may be an area through which light incident on each of the lenses passes. That is, the effective region may be defined as an effective area or effective diameter where the incident light is refracted to realize optical characteristics. The ineffective region may be placed around the periphery of the effective region. The ineffective region may be an area where effective light is not incident from the plurality of lenses. That is, the ineffective region may be an area unrelated to the optical characteristics. Additionally, the end of the ineffective region may be an area fixed to a lens barrel (not shown), etc., that accommodates the lens.

Among the lenses of the optical system 110, the lens having the maximum center thickness may be a spherical lens, and the lens having the maximum edge thickness may be an aspherical lens. The lens 113 having the maximum thickness and the lens 113 having the maximum effective diameter may be the same lens. The center thickness of the aspherical lens may be greater than the average of the center thicknesses of the spherical lenses. Such an aspherical lens may be placed adjacent to the light source 116 to refract laser light across the entire area of the object-side lenses.

In the optical system 110, the total top length (TTL) may be greater than 5 times the LsH, for example, greater than 5 times and less than 15 times. The TTL is the distance along the optical axis OA from the center of the object-side surface of the first lens 111 to the surface of the light source 116. The LsH is the distance from the center of the light source 116 to the diagonal end, or half of the maximum diagonal length of the light source 116. Additionally, the effective diameter of each lens within the optical system 110 may be greater than the diagonal length of the light source 116. Within the optical system 110, the effective focal length (EFL) may be greater than 5 mm and the field of view (FOV) may be less than 70 degrees or 29 ± 10 degrees, so that it may be provided as a standard transmission optical system in a vehicle sensor system. For example, the transmission optical system and sensor system according to the embodiment may be applied to a sensing device for an ADAS (Advanced Driving Assistance System) installed inside or outside a vehicle. The FOV may be defined as the divergence angle in the transmission optical system.

Since the optical system 110 satisfies the Mathematical expression: 5 < TTL/LsH < 15, the center thickness of each lens along the optical axis OA may be increased and the size of the light source 116 may be reduced. Accordingly, an optical system for automotive lenses may be provided. In addition, for use in automotive cameras, temperature compensation must be applied within the temperature range that serves as the temperature reliability evaluation standard for automotive electronic components, namely -40°C to 120°C. That is, the lens must be configured so that the focal point of the lens remains within the set range even when the lens expands or contracts due to changes in temperature. It may be composed of lenses made of glass material capable of the aforementioned temperature compensation, with an overall effective focal length (EFL) greater than 5mm, for example, in the range of 8mm to 20mm. The optical system 110 can achieve a narrow angle by making the effective focal length longer than that of the receiving optical system.

In the optical system 110, the number of lenses having positive (+) refractive power may be two or more, and the number of lenses having negative (-) refractive power may be two or fewer. Since this optical system 110 is a mixture of spherical lenses and aspherical lenses made of glass material, it is possible to prevent a decrease in optical performance. In the optical system 110, the effective diameter of the lens closest to the object may be smaller than the effective diameter of the lens closest to the light source 116. Accordingly, the brightness of the optical system may be controlled. By controlling the size of the effective diameters of each of the lenses, the optical system 110 can control the emitted light to compensate for the decrease in optical characteristics due to resolution and temperature changes, and can improve chromatic aberration control characteristics. By adjusting the effective diameters of the lenses, the optical system 110 may be made smaller.

The optical system 110 may include a first lens 111, a second lens 112, a third lens 113, and a fourth lens 114 aligned along an optical axis OA from the object toward the light source side. The first to fourth lenses 111, 112, 113, and 114 may be defined as lens portions. The light source 116 generates a laser beam, and the wavelength of the laser beam may be in the range of 890 nm to 960 nm or 940 nm ± 10 nm. As another example, the wavelength of the laser beam may be 1550 nm ± 10 nm. The light source 116 may be implemented as an InGaAs/GaAs-based semiconductor diode laser and may emit high-power laser light. The light source 116 may include a single emitter and/or multiple emitters. The light source 116 generates laser light in the form of a line light source or a point light source.

Described as an absolute value of the radius of curvature, the lens surface having the minimum radius of curvature relative to the optical axis OA within the optical system 110 may be the light source-side surface S8 of the fourth lens 114 among the spherical surfaces. Accordingly, the center distance CG2 between the second lens 112 and the third lens 113 may be set larger than the center distance CG1 between the first lens 111 and the second lens 112. The lens surface having the maximum radius of curvature within the optical system 110 may be the light source-side surface of the third lens 113. By adjusting the radius of curvature of each lens, the Chief ray angle (CRA) from the optical axis to the end of the effective area, that is, across the entire field, may be minimized to 0.5 degrees or less, thereby maximizing transmission efficiency. Here, as the CRA increases, the asymmetry of the divergence angle with respect to the center of the light source 116 of the optical system 110 increases, and as a result, the transmission efficiency may be reduced.

The optical system 110 may include an aperture stop ST. The aperture stop ST can control the amount of light emitted from the optical system 110. The aperture stop ST may be placed around the perimeter on the object-side surface of the first lens 111. The aperture stop ST may be spaced apart from the object-side surface of the first lens 111 by a predetermined distance CG0. The optical axis distance CG0 between the first lens 111 and the aperture stop ST may be 1.2 mm or more. Since the aperture stop ST is spaced apart from the object-side surface of the first lens 111 by the aforementioned distance, the increase in the effective length of the diffuser 119 may be suppressed.

As shown in FIGS. 11 and 12, the diffuser 119 may be positioned between the object and the aperture stop ST. The diffuser 119 may include a lens array, such as a micro-lens array, on at least one of the incident-side surface and the exit-side surface. The micro-lens array may be positioned on the exit-side surface of the diffuser 119. Each of the micro-lenses 119A may have a long length in the first direction (vertical direction) and may be spaced apart from each other in the second direction (horizontal direction). Each of the lenses may have a side cross-section that includes a cylindrical shape and may have a convex hemispherical shape. The diffuser 119 may have a planar shape that is square.

The diffuser 119 can refract the light emitted through the first lens 111 to emit parallel light. Since the light emitted through the first lens 111 is provided as parallel light, the radius of curvature of the object-side surface of the fifth lens 101 of the receiving optical system 100 of FIG. 1 may be increased to be like a flat surface. Accordingly, the amount of light incident through the fifth lens 101 may be increased.

In the optical system 110 having the first to fourth lenses 111-114, the object-side diffuser 119 is arranged in a one-dimensional shape, so the horizontal field of view (HFOV) of the receiving optical system 100 may be diffused to 120 degrees or more. That is, by arranging a cylindrical lens array with a long length in the first direction (vertical direction) for the diffuser 119, the vertical field of view (VFOV) may be increased while the horizontal field of view (HFOV) remains largely unchanged. Due to this diffuser 119, the aspect ratio of the optical system 110 and the receiving optical system 100 is the ratio of the width to the height of the image sensor, and may be expressed as H:V=1:7. Compared to the aspect ratio of the existing receiving optical system, which is H:V=3.43:1, this has the effect of enabling optical matching through the diffuser 119 even if the aspect ratios of the optical system and the receiving optical system are different. Accordingly, the size of the transmitting/receiving optical system may be reduced.

In the transmission optical system 110 of the embodiment, the sum of the refractive indices of the lenses of the lens portion 110 is 6 or more, for example, in the range of 6 to 10, and the average of the refractive indices may be in the range of 1.70 to 1.80. The sum of the Abbe numbers of each of the lenses is 180 or less, for example, in the range of 120 to 180, and the average of the Abbe numbers may be 50 or less, for example, in the range of 35 to 50. By adjusting the refractive indices of the lenses within the optical system 110, the decrease in transmission efficiency due to temperature changes from -45 to 120 degrees may be prevented and thermal compensation may be optimized. In addition, by adjusting the Abbe numbers of the lenses, the deviation in transmission efficiency according to wavelength may be minimized.

In the transmission optical system, the sum of the center thicknesses of all lenses is 13 mm or more, for example, in the range of 13 mm to 23 mm, and the average of the center thicknesses may be 3.9 mm or more, for example, in the range of 3.9 mm to 5.9 mm. The sum of the center distances between the lenses on the optical axis OA is 25 mm or less, for example, in the range of 8 mm to 20 mm, and may be smaller than the sum of the center thicknesses of the lenses. The optical system 110 can optimize thermal compensation and prevent degradation of optical performance due to temperature changes from -45 degrees to 120 degrees by adjusting the thickness of the lenses.

In the optical system according to an embodiment of the invention, the field of view may be less than 70 degrees, for example, in the range of 20 degrees to 60 degrees. The F-number of the optical system or camera module may be 1.8 or less, for example, in the range of 1.2 to 1.8 or 1.2 to 1.7. Thus, the optical system 110 can provide a bright optical system. In addition, the relative illumination (RI) may be 90% or more, for example, 93% or more. The diagonal length of the light source 116 may be 8.33 mm ± 0.5 mm and may be greater than the height of the image sensor in the vertical direction. The invention may be provided as a vehicle LIDAR device that can suppress changes in the focal position due to temperature changes by stacking glass lenses and correct various aberrations by providing an aspherical lens.

FIG. 11 is a transmission optical system applied to a LIDAR device, so the first lens 111 may be made of glass material. This is because glass material has the advantage of being resistant to scratches and not sensitive to external temperatures compared to plastic material. A glass lens is used as the first lens 111 to be placed inside a vehicle or to more effectively prevent scratches caused by foreign substances, and the object-side surface of the first lens 111 may have a convex shape to prevent external foreign substances from accumulating. The LIDAR device can detect the distance, direction, speed, temperature, material distribution, and concentration characteristics to an object during vehicle operation. Such a LIDAR device may be used for Advanced Driver Assistance Systems (ADAS). The optical system 110 according to the embodiment may further include a reflective member (not shown) for changing the path of light. The reflective member may be placed on the object side of the diffuser 119 and may be implemented as a prism. Hereinafter, the optical system according to the embodiment will be described in detail.

Referring to FIGS. 11 and 14, the optical system 110 may include a first lens 111 to a fourth lens 114 that are sequentially aligned along the optical axis OA. Laser light generated from the light source 116 may be emitted by the fourth lens 114, the third lens 113, the second lens 112, and the first lens 111 and irradiated onto a subject through the diffuser 119.

The aperture stop ST may be positioned closer to the diffuser 119 than to the object-side surface of the first lens 111. The aperture stop ST may be spaced apart by a predetermined distance CG0 from the vertex of the first surface S1 of the first lens 111. Since the first lens 111 adjacent to the light source side of the aperture stop ST has a positive refractive power (F1 > 0), the first lens 111 can refract the emitted light in the direction of the optical axis and prevent an increase in the distance between the first lens 111 and the light source side or rear side lens.

The diffuser 119 is positioned on the object side of the aperture stop ST and can refract the light traveling through the aperture stop ST toward the subject as parallel light. As shown in FIGS. 12 and 13, the diffuser 119 of the embodiment controls the path of passing light using a micro-lens array. At this time, a change in the Field of Illumination (FOI) occurs in an on-axis direction separate from the direction of light propagation. In the comparative example of FIG. 13, it may be seen that a change in the FOI occurs in the off-axis direction after passing through the micro-lens array. Here, when describing the light path after passing through the diffuser 119, the comparative example has a light path of F*θ, while the embodiment has a light path of f*sinθ.

The power of the first lens 111 may be positive (+) or negative (-) on the optical axis OA, for example, positive (+). The first lens 111 may include a plastic material or a glass material, for example, it may be a glass material. The first lens 111 made of the glass material can reduce changes in the center position and radius of curvature due to temperature changes in the surrounding environment, and can protect the exit side surface of the optical system 110.

On the optical axis OA, the first surface S1 on the object side of the first lens 111 may have a convex shape, and the second surface S2 on the light source side may have a convex shape. The first surface S1 and the second surface S2 may have spherical shapes. The first lens 111 may have a convex shape on both sides. Alternatively, the first lens 111 may have a meniscus shape that is convex toward the object side. Alternatively, on the optical axis OA, the first surface S1 may have a concave shape, and the second surface S2 may have a convex shape. Since the first surface S1 is convex, the first lens 111 can refract the emitted light in a direction close to the optical axis OA, reduce the distance between the first and second lenses 111 and 112, and reduce the effective diameter of the first lens 111. Due to the shape of the lens surface of the first lens 111, the effective diameter of the light source-side surface of the second lens 112 may be designed to be smaller than the effective diameter of the object-side surface. The first surface S1 and the second surface S2 of the first lens 111 may be provided without a critical point from the optical axis OA to the end of the effective area, i.e., the edge. When the refractive index of the first lens 111 is Nd1, the condition may be satisfied: Nd1 > 1.70 or 2.0 > Nd1 > 1.70. Since the refractive index Nd1 of the first lens 111 is higher than that of an aspherical lens, the radius of curvature of the first surface S1 of the first lens 111 may be larger than that of an aspherical lens, and the lens may be manufactured easily. If the refractive index Nd1 of the first lens 111 is smaller than the condition, the lens surface must be formed to be sharply concave or convex to increase the refractive power of the first and second lenses 111 and 112, and in this case, the lens manufacturing is not easy, the lens defect rate increases, and it may cause a decrease in yield. Since the first lens 111 is placed on the light source side of the aperture stop ST and diffuser 119, the center thickness CT1 of the first lens 111 may be provided thinner than the center thickness of the third and fourth lenses 113 and 114. Additionally, the effective diameter of the first lens 111 may be smaller than the effective diameter of the third and fourth lenses 113 and 114. Since the first lens 111 is positioned on the light source side of the aperture stop ST and diffuser 119, the radius of curvature of the first lens 111 may have a radius of curvature greater than the average of the absolute values of the radius of curvature of the second lens 112. The radius of curvature of each lens is the average of the absolute values of the radius of curvature of the object-side surface and the light source-side surface of each lens.

The second lens 112 may be positioned between the first lens 111 and the third lens 113. The power of the second lens 112 may be positive (+) or negative (-) on the optical axis OA, for example, negative (-). The second lens 112 may include a plastic or glass material, and, for example, may be provided as a spherical lens made of glass. On the optical axis OA, the object-side third surface S3 of the second lens 112 may have a concave shape, and the light source-side fourth surface S4 may have a concave shape. The third and fourth surfaces S3 and S4 may be spherical. The third and fourth surfaces S3 and S4 may be provided without a critical point up to the end of the central effective area of each lens surface. Alternatively, the third surface S3 may have a convex shape, and the fourth surface S4 may have a concave shape. Alternatively, the second lens 112 may have a convex shape on both sides.

If the refractive index of the second lens 112 is Nd2, the condition may be satisfied: Nd2 < 1.7 or 1.4 < Nd2 < 1.7. The refractive index Nd2 of the second lens 112 may be lower than the refractive index of an aspherical lens. Since the fourth surface S4 on the light source side of the second lens 112 is concave and the radius of curvature is small, less than 20 mm, the center distance between the second lens 112 and the third lens 113 may be separated. In addition, if the radius of curvature of the third surface S3 of the second lens 112 is L2R1 and the radius of curvature of the fourth surface S4 is L2R2, the condition may be satisfied: L2R2 < |L2R1|. If this condition is satisfied, the light emitted by the third and fourth surfaces S3 and S4 may be efficiently refracted, thereby preventing the effective diameter of the first lens 111 from increasing and reducing the TTL.

The power of the third lens 113 may be positive (+) or negative (-) on the optical axis OA, for example, it may be positive (+). The third lens 113 may include plastic or glass material, for example, it may be glass material. On the optical axis OA, the object-side fifth surface S5 of the third lens 113 may have a convex shape, and the light source-side sixth surface S6 may have a concave shape. The third lens 113 may have a convex shape on both sides on the optical axis OA. At least one or both of the fifth surface S5 and the sixth surface S6 may be spherical. At least one or both of the fifth surface S5 and the sixth surface S6 may be provided without a critical point from the optical axis OA to the end of the effective area. Alternatively, the third lens 113 may have a meniscus shape that is convex toward the object. Alternatively, the third lens 113 may have a meniscus shape that is concave on both sides or convex toward the light source.

If the refractive index of the third lens 113 is Nd3, the condition may be satisfied: Nd3 > 1.7 or 2.0 > Nd3 > 1.70. The first to third lenses 111, 112, and 113 may all be aspherical. The first and third lenses 111 and 113 may have the same refractive index. If the Abbe number of the third lens 113 is Vd3, the condition may be satisfied: Vd3 < Vd4. Additionally, the condition may be satisfied: Nd4 < Nd3. Nd4 is the refractive index of the fourth lens 114. Vd4 is the Abbe number of the fourth lens 114.

The power of the fourth lens 114 may have a positive (+) or negative (-) refractive power on the optical axis OA, for example, positive. The fourth lens 114 may include plastic or glass materials and may be provided as glass material. The fourth lens 114 may be an injection-molded glass mold. On the optical axis OA, the object-side seventh surface S7 of the fourth lens 114 may have a convex shape, and the light source-side eighth surface S8 may have a concave shape. The fourth lens 114 may have a meniscus shape that is convex toward the object. At least one or both of the seventh surface S7 and the eighth surface S8 may be aspherical. The aspherical coefficients of the seventh and eighth surfaces S7 and S8 may be provided as S7 and S8 of L4 in FIG. 15. At least one of the object-side surface and the light source-side surface of the fourth lens 114 may have a free-form surface, i.e., a non-rotationally symmetric surface. Alternatively, the fourth lens 114 may have a meniscus shape that is convex toward the light source 116 on the optical axis OA.

The seventh and eighth surfaces S7 and S8 of the fourth lens 114 may be provided without a critical point from the optical axis OA to the end of the effective area. As another example, at least one of the seventh surface S7 and the eighth surface S8 may have a critical point. Here, the critical point is a point where the sign of the slope value with respect to the optical axis OA and the direction perpendicular to the optical axis OA changes from positive (+) to negative (-) or from negative (-) to positive (+), and may mean a point where the slope value is 0. Additionally, the critical point may be a point where the slope value of the tangent line passing through the lens surface increases and then decreases, or decreases and then increases.

The effective diameter of the fourth lens 114 may be smaller than the effective diameter of the third lens 113. The effective diameter of the third lens 113 may be the largest among the lenses. The second lens 112 has a lower refractive index than the first, third, and fourth lenses 111, 113, and 114 and may have a higher Abbe number than the Abbe number of the first, third, and fourth lenses 111, 113, and 114.

The power of the first lens 111 and the third and fourth lenses 113 and 114 may have a positive value, and the power of the second lens 112 may have a negative value. The fourth lens 114 may be an aspherical lens closest to the light source 116. Aberrations such as spherical aberration and chromatic aberration may be improved by the lens surface having an aspherical shape.

The center thickness of the first to fourth lenses 111 to 114 is denoted as CT1 to CT4, the edge thickness at the end of the effective area of each lens is denoted as ET1 to ET4, and the center distance between two adjacent lenses is denoted as CG1 to CG3.

The first to fourth lenses 111 to 114 may be satisfied the following conditions.

| | |
|---|---|
| Condition 1: CT2 < CT1 < CT3 | Condition 2: CT1 < CT4 ≤ CT3 |
| Condition 3: (CT3-CT4) < (CT1-CT2) | Condition 4: ET3 < ET1 < ET2 |
| Condition 5: ET1 < ET2 < ET4 | Condition 6: ET4 < ET2 < CT4 |
| Condition 7: CG1 < CT1 < CG2 | |

The center thickness CT3 of the third lens 113 is the maximum among the lenses, and the center thickness CT2 of the second lens 112 is the minimum among the lenses. The maximum center thickness may be at least 2 mm thicker than the minimum center thickness. That is, by adjusting the thickness of the spherical lens and the aspherical lens, the degradation of optical performance may be prevented, and the size of the sensor system or the height of the light source may be provided slimly.

To describe the center distance between adjacent lenses, the center distance CG2 between the second lens 112 and the third lens 113 is maximum, and the center distance CG3 between the third and fourth lenses 113 and 114 is minimum. Here, the difference between the maximum center distance and the minimum center distance may be 5 mm or more, for example, in the range of 5 mm to 7 mm. Additionally, a transmission optical system may be provided in which the maximum center distance between the lenses is smaller than the maximum center thickness of each lens and does not increase the center distance between the aspherical lens and the spherical lens. Furthermore, since the maximum center distance between the lenses is provided to be larger than the minimum center thickness of each lens, the light path may be controlled.

The effective diameter of the first and second lenses 111 and 112 may be provided to be smaller than the effective diameter of the third lens 113 by the shape of the light source-side surface of the second lens 112 and the distance between the second and third lenses 112 and 113. The effective diameter of the third lens 113 may be the largest among the lenses.

The lens having the maximum effective diameter may be the third lens 113. The lens surface having the maximum effective diameter may be the sixth surface S6 of the third lens 113. The lens having the minimum effective diameter may be the first lens 111 adjacent to the aperture stop ST. The lens surface having the minimum effective diameter may be any one of the third and fourth surfaces S3 and S4 of the second lens 112 or the eighth surface S8 of the fourth lens 114. The effective diameter of each of the first to fourth lenses 111-114 may be larger than the diagonal length of the light source 116. The fourth lens 114 may have an aspherical surface and may guide incident light to a spherical lens.

FIG. 14 is an example of lens data for the optical system of FIG. 11. As shown in FIG. 14, the radius of curvature at the optical axis OA, the center thickness CT of the lens, the center distance CG between the lenses, the refractive index at the d-line, the Abbe number, the effective diameter, and the focal length may be set. When comparing the focal lengths in absolute values, the focal length of the fourth lens 114 is the maximum among the lenses and may be 100 mm or more, and the focal length of the second lens 112 is the minimum among the lenses and may be 20 mm or less. Based on absolute values, the focal length of the fourth lens 114 may be five times or more the focal length of the fourth lens 114. The absolute value of the radius of curvature of the second surface S2 of the first lens 111 may be 100 mm or more, having the largest radius of curvature among the lens surfaces. Accordingly, within the field of view range set in the optical system, it is possible to have improved MTF characteristics, aberration control characteristics, etc., and to have good optical performance.

As shown in FIG. 15, the lens surface of the fourth lens 114 among the lenses of the embodiment may include an aspherical surface having a conic constant (K) and a 14th-order aspherical coefficient (A~F). For example, the object-side surface and the light source-side surface of the fourth lens 114 may be lens surfaces having a 14th-order aspherical coefficient. As described above, an aspherical surface having a 14th-order aspherical coefficient (a non-zero value) can significantly change the shape of the aspherical surface in the periphery, and thus can effectively correct the optical performance of the periphery of the FOV.

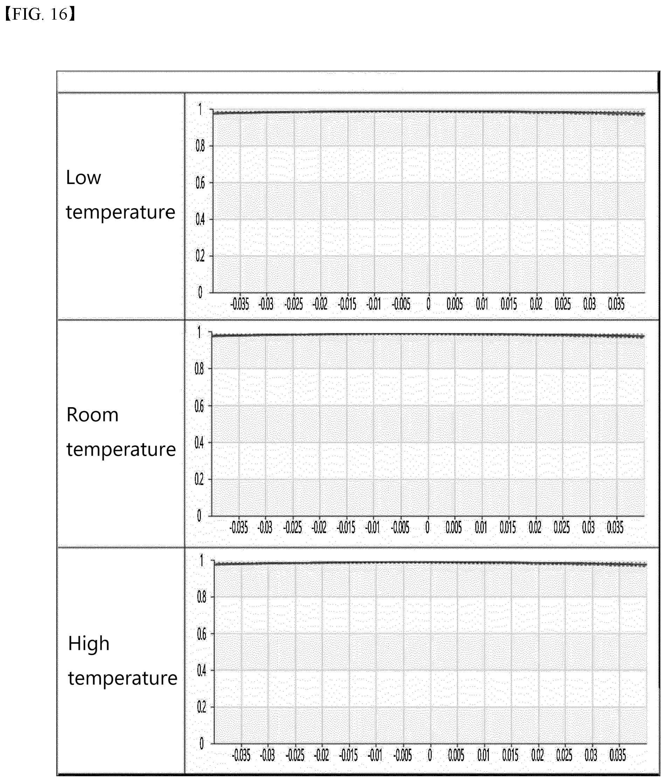

FIG. 16 is a graph showing the modulation transfer function (MTF) of the diffraction at low, room, and high temperatures in the optical system of FIG. 11, and represents the modulation of luminance according to spatial frequency. As shown in FIG. 16, in an embodiment of the invention, the deviation of the MTF from low or high temperatures relative to room temperature may be less than 10%, i.e., 7% or less. Here, each MTF curve was measured in increments of 0.394 mm from 0.000 mm to 3.940 mm.

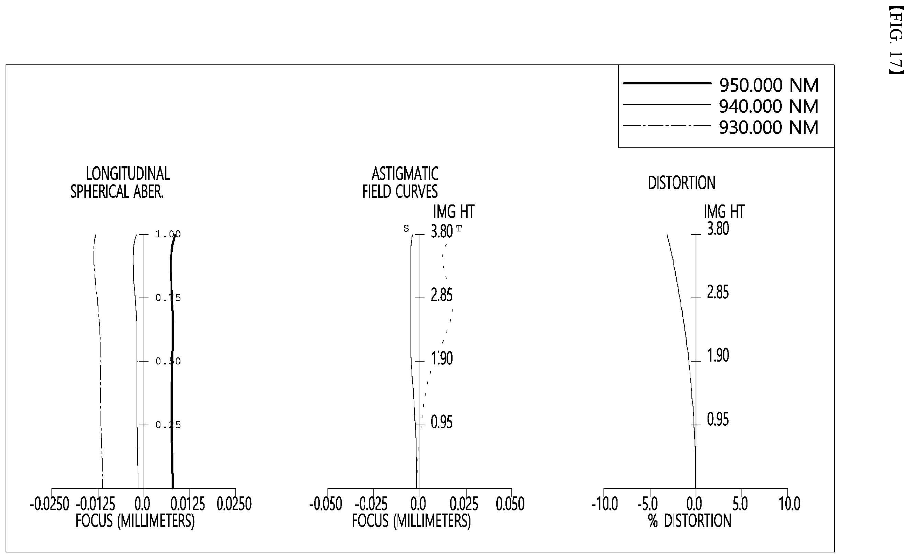

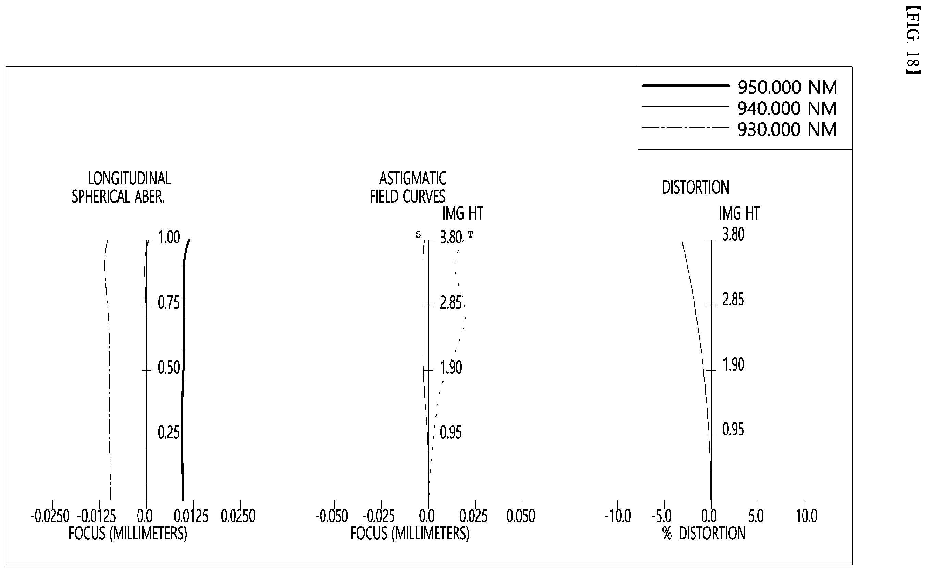

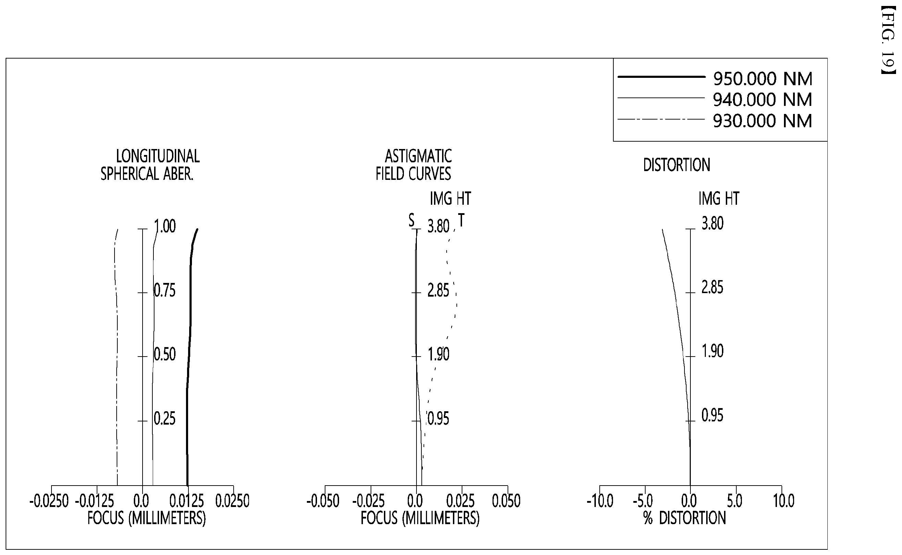

FIG. 17 to 19 are graphs showing the aberration characteristics of the optical system of FIG. 11 at low, room, and high temperatures. The aberration graphs of FIG. 17 to 19 show the longitudinal spherical aberration, astigmatic field curves, and distortion measured from left to right. In FIGS. 17 to 19, the X-axis may represent focal length (mm) and distortion (%), and the Y-axis may represent the height of the light source. Additionally, the graph for spherical aberration is for light in the wavelength bands of approximately 930 nm, approximately 940 nm, and approximately 950 nm, and the graphs for astigmatism and distortion aberration are for light in the wavelength band of approximately 940 nm. In the aberration diagrams of FIGS. 17 to 19, it may be interpreted that the closer each curve at low temperature, room temperature, and high temperature is to the Y-axis, the better the aberration correction function. Here, low temperature is - 20 degrees or lower, for example, in the range of -20 to -50 degrees; room temperature is in the range of 22 ± 5 degrees or 18 to 27 degrees; and high temperature is 85 degrees or higher, for example, in the range of 85 to 120 degrees. Accordingly, it may be seen that the decrease in luminance modulation from low to high temperatures in FIGS. 17 to 19 is less than 10%, for example, 5% or less, or hardly changes.

The optical system exhibits chromatic aberration, and this is corrected by using spaced-apart aspherical lenses. As the temperature changes from low to high, the lenses repeatedly contract and expand. Since lenses of the same material exhibit the same amount of change in lens characteristics due to temperature changes, it is effective to correct chromatic aberration between lenses of the same material even when the temperature changes. For example, as shown in Table 1, it may be seen that there is almost no change in optical characteristics when the temperature of the lens barrel or receiving optical system changes from -45°C (low temperature) to 22°C (room temperature) and 90°C (high temperature).

Table 5 compares the changes in optical characteristics, such as EFL, BFL, F-number (F#), TTL, and FOV, at room temperature, low temperature, and high temperature in the transmission optical system according to the embodiment. It may be seen that the rate of change in optical characteristics at low temperature relative to room temperature is 5% or less, for example, 3% or less or 2% or less, and the rate of change in optical characteristics at high temperature relative to room temperature is 5% or less, for example, 3% or less or 2% or less.

**[Table 5]**

| | Low temperature | Room temperature | High temperature | Low temperature/ Room temperature (%) | High temperature/ Room temperature (%) |
|---|---|---|---|---|---|
| EFL | 15.279 | 15.290 | 15.303 | 99.93% | 100.09% |
| BFL | 6.116 | 6.125 | 6.135 | 99.85% | 100.16% |
| Fno | 1.576 | 1.576 | 1.576 | 100.00% | 99.98% |
| TTL | 37.627 | 37.663 | 37.701 | 99.90% | 100.10% |
| FOV | 28.762 | 28.742 | 28.722 | 100.07% | 99.93% |

Accordingly, as shown in Table 5, it may be seen that the change in optical characteristics due to temperature changes from low to high temperatures, such as the rate of change in effective focal length (EFL), TTL, BFL, F number, and FOV, is 10% or less, i.e., 5% or less, for example, in the range of 0 to 5%. This design allows for temperature compensation for the aspherical lens even when using at least one aspherical lens, thereby preventing a decrease in the reliability of optical characteristics. The transmission optical system of the embodiment disclosed above can effectively control aberration characteristics such as chromatic aberration and distortion aberration, and can provide good optical performance in the center and periphery of the FOV. Here, EFL is the effective focal length of the receiving optical system, BFL is the optical axis distance from the last lens, i.e., the fourth lens 104, to the surface of the light source 116, Fno is the F number of the transmission optical system, TTL is the optical axis distance from the first lens 111 to the surface of the light source 116, and FOV is the field of view or divergence angle of the receiving optical system.

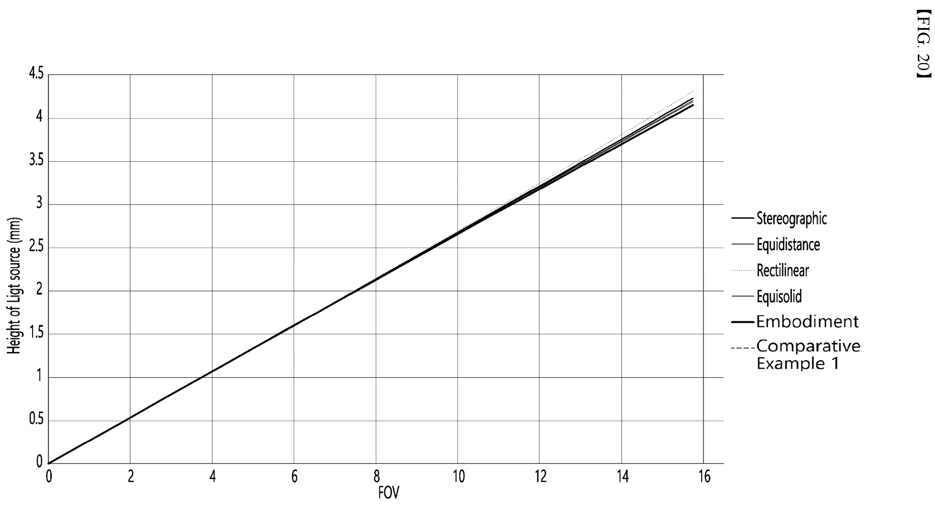

Referring to FIG. 20, the optical system 110 may have a set distortion characteristic compared to a design standard (comparative example) as the angle of view increases from 0 degrees to the maximum HFOV (Half FOV). For example, in an embodiment of the optical system 110, it can be seen that the light source height increases further as the angle of view moves from 0 degrees toward the maximum half FOV. Furthermore, it may possess distortion characteristics that are satisfied in comparison with other mapping examples such as Stereographic, equidistance, rectilinear, and Equisolid. Specifically, the embodiment may be satisfied the distortion characteristic compared to Comparative Example 1. Here, the half-field of view is half FOV and may be set to an angle of up to approximately 16 degrees relative to the optical axis of 0 degrees.

In addition, the receiving optical system 110 may have set distortion characteristics as the field of view increases from 0 degrees to the maximum half FOV compared to other examples, thereby providing an optical system that satisfies an orthographic projection type. Here, the ratio regarding the distortion characteristics refers to a value calculated based on the light source height at a specific half FOV position, represented by the formula: ((Other Example - Embodiment) / Embodiment * 100). Accordingly, the optical system according to the embodiment can prevent optical properties from changing due to temperature fluctuations within a range from low (-40°C) to high (120°C) temperatures based on an equal-area mapping method, and can maintain enhanced optical performance across various temperature ranges

The transmission optical system according to the embodiment of the invention can prevent degradation of optical performance from low temperature to high temperature by considering the characteristics of the optical system for vehicles. For example, a lens may be designed at room temperature, and then the value of dn/dt, which is the coefficient of change of refractive index by temperature, may be assembled by considering the power combination of each lens. Then, the defocus for the thickness variable may be set to 2.5 µm or less according to the value of the temperature coefficient (dn/dt) according to the refractive index of the lens and low temperature, room temperature, and high temperature. To this end, the first to third lenses 111, 112, and 113 are made of spherical glass material, and the fourth lens 114 is made of aspherical glass material.

The transmission optical system 110 according to the embodiment disclosed above may satisfy at least one or two of the Mathematical expressions described below. Accordingly, the optical system 110 according to the embodiment can have improved optical characteristics. For example, if the optical system 110 satisfies at least one Mathematical expression, the optical system 110 can effectively control aberration characteristics such as chromatic aberration and distortion aberration. Additionally, the optical system 110 may have improved resolution. Furthermore, regarding the thickness of the lens along the optical axis OA and the distance of adjacent lenses along the optical axis OA as described in the Mathematical expressions, one may refer to the embodiments disclosed above. $1 < CT 1 / CT 2 < 3$

CT1 is the center thickness of the first lens 111, and CT2 is the center thickness of the second lens. By setting the center thickness CT1 of the first lens 111 and the center thickness CT2 of the second lens 112 in Mathematical expression 1, a decrease in the rigidity of the first lens 111 may be prevented, and factors affecting aberrations may be controlled. Preferably, Mathematical expression 1 may be satisfied: 1.5 < CT1 / CT2 < 2.2.$0.5 < CT 4 / CT 3 < 1.5$

CT3 and CT4 are the center thicknesses of the third and fourth lenses 113 and 114. By setting the center thicknesses of the third and fourth lenses 113 and 114 in Mathematical expression 2, it is possible to prevent a decrease in the rigidity and optical properties of the glass lenses and to control factors affecting aberrations. Preferably, CT4 ≤ CT3 may be satisfied.$1 < CT 3 / CT 2 < 4$

In Mathematical expression 3, the center thicknesses of the second and third lenses 112 and 113 may be set, allowing for the optimization of thermal compensation according to temperature changes from low to high temperatures and preventing a decrease in optical performance. Preferably, Mathematical expression 3 may be satisfied: 2.5 < CT3 / CT2 < 3.5.$1 < CG 2 / CT 2 < 4$

CG2 is the center distance between the second and third lenses 112 and 113. By setting the center distance between the second and third lenses 112 and 113 in Mathematical expression 4 to the range, the light refracted through the aspherical fourth lens 114 may be guided along the distance between the second and third lenses 112 and 113. Preferably, Mathematical expression 4 may be satisfied: 2 < CG2 / CT2 < 3.$0.5 < CT 3 / \left(CT1+CT2\right) < 1.5$

Mathematical expression 5 can set the center thickness between the first, second, and third lenses 111, 112, and 113. Preferably, Mathematical expression 5 may be satisfied: 0.8 < CT3 / (CT1+CT2) < 1.2.$2 < CG 2 / CG 1 < 5$

CG1 is the center distance between the first and second lenses 111 and 112. In Mathematical expression 6, the center distance CG1 between the first and second lenses 111 and 112 is set to be smaller than the center distance CG2 between the second and third lenses 112 and 113, thereby preventing an increase in the effective diameter of the first lens 111. Additionally, the center distance between the spherical lenses may be set by Mathematical expression 6. Preferably, 3 < CG1 / CG2 < 4.6 may be satisfied.$5 < CG 2 / CG 3 < 20$

In Mathematical expression 7, the center distance CG2 between the second and third lenses 112 and 113 is set to be larger than the center distance CG3 between the third and fourth lenses 113 and 114, so that the center distance between the spherical lenses and the aspherical lenses may be reduced compared to the center distance between the spherical lenses. Preferably, 5 < CG2 / CG3 < 10 may be satisfied.$0.5 < CT 3 / \left(CT1+CG1+CT2\right) < 1.5$

In Mathematical expression 8, the center thickness CT3 of the third lens 113 may be set to be smaller than the optical axis distance between the object-side surface of the first lens 111 and the light source-side surface of the second lens 112. Preferably, Mathematical expression 8 may be satisfied: 0.6 < CT3 / (CT1+CG1+CT2) < 1.$0.5 < SD / TTL < 1.5$

SD is the optical axis distance from the aperture stop ST to the surface of the light source 116, and TTL is the optical axis distance from the object side of the first lens to the surface of the light source. Preferably, it may be satisfied: 0.8 < SD/TTL < 1.2. If the optical system satisfies Mathematical expression 9, the aperture stop ST may be positioned at the furthest position from the light source 116, that is, closer to the object than the first lens 111, thereby allowing the amount of emitted light to be controlled.$1.70 < Nd 1$

Nd1 is the refractive index of the first lens 111 at the d-line. By setting the refractive index of the first lens 111 high in Mathematical expression 10, factors affecting the reduction of third-order aberrations (Seidel aberrations) of the optical system may be controlled, and aberrations that may occur as the TTL becomes somewhat longer may be reduced. Mathematical expression 10 preferably satisfies: 1.75 < Nd1 < 2.0. If designed to be lower than the lower limit of Mathematical expression 10, performance that reduces aberrations may be obtained, but the refractive power of the first lens weakens, so light cannot be efficiently collected, and the performance of the optical system may deteriorate. If designed to be higher than the upper limit of Mathematical expression 10, there is a disadvantage that it becomes difficult to obtain materials. Additionally, if the refractive index of the first lens 111 is designed to be lower than the lower limit of Mathematical expression 4, the radius of curvature of the first and second lenses may be increased to increase the refractive power of the first and second lenses.$0.5 < Nd 1 / Nd 3 < 1.5$

Nd1 and Nd3 are the refractive indices at the d-line of the first and third lenses 111 and 113. In Mathematical expression 11, the difference between the refractive index of the first lens 111 and the refractive index of the third lens 113 may be reduced to prevent a decrease in chromatic dispersion caused by the glass lenses. Preferably, the refractive indices of the first, second, and third lenses may be the same.$1 < Nd 1 / Nd 4 < 1.5$

Nd1 and Nd4 are the refractive indices at the d-line of the first and fourth lenses 111 and 114. In Mathematical expression 12, the refractive index of the first lens 111 is set higher than the refractive index of the fourth lens 114 to control chromatic dispersion caused by spherical lenses and chromatic dispersion caused by aspherical lenses. Preferably, Mathematical expression 12 may be satisfied: 1 < Nd1/Nd4 < 1.2.$\left(Vd3*Nd3\right) < \left(Vd4*Nd4\right)$

Nd3 and Nd4 are the refractive indices at the d-line of the third and fourth lenses 113 and 114, and Vd3 and Vd4 are the Abbe numbers of the first and fourth lenses. In Mathematical expression 13, the product of the refractive index and Abbe number of the first lens 111 is set smaller than the product of the refractive index and Abbe number of the fourth lens 114 to control chromatic dispersion caused by spherical lenses and chromatic dispersion caused by aspherical lenses.$TD < SD$

SD is the optical axis distance from the aperture stop ST to the surface of the light source 116, and TD is the optical axis distance from the object-side surface of the first lens 111 to the light source-side surface of the fourth lens 114. If the optical system satisfies Mathematical expression 14, the aperture stop ST may be located on the object side rather than the first lens 111.$TTL < SD$

If Mathematical expression 14-1 is satisfied, the position of the aperture stop ST may be set to be located on the object side rather than the first lens 111.$1 < CA 42 / CT 4 < 3$

CA42 is the effective diameter of the light source-side surface of the fourth lens 114, and CT4 is the center thickness of the fourth lens. If Mathematical expression 15 is satisfied, the effective diameter of the last lens may be set so that it is not large relative to the center thickness. Preferably, 1.2 < CA42 < CT4 < 2 may be satisfied.$1 < CA 3 / CA 2 < 3$

CA2 and CA3 are the effective diameters of the second and third lenses. CA2 and CA3 represent the average of the effective diameters of the object side and sensor side of the second and third lenses. If Mathematical expression 16 is satisfied, a lens with the maximum effective diameter and a lens with the minimum effective diameter may be set. Preferably, 1.3 < CA3 / CA2 < 2.3 may be satisfied.$0.5 < CA 1 < CA 2 < 1.5$

CA1 is the effective diameter of the first lens. That is, CA1 is the average of the effective diameters of the object-side and light source-side surfaces of the first lens. In Mathematical expression 17, the effective diameters of the two exit-side lenses or the exit-side spherical lenses may be set. Preferably, 0.8 < CA1 < CA2 < 1.2 may be satisfied.$1 < CA 3 / CA 4 < 2$

CA3 and CA4 represent the effective diameters of the third and fourth lenses 113 and 114. In Mathematical expression 18, the effective diameters of the two light source-side lenses or the adjacently placed spherical and aspherical lenses may be set. If Mathematical expression 18 is satisfied, the emission efficiency of the light emitted from the light source 116 may be improved, and preferably, 1.2 < CA3 / CA4 < 1.6 may be satisfied.$1 < CA 32 / CA 21 < 3$

CA32 represents the effective diameter of the sixth surface S6 of the third lens 113, and CA21 represents the effective diameter of the third surface S3 of the second lens 112. If Mathematical expression 19 is satisfied, the optical system 110 can control the light path emitted from the light source 116 and can set the light source-side surface of the second lens 112 to a concave shape. Preferably, Mathematical expression 19 may be satisfied: 1.5 < CA32 / CA21 < 2.$0.5 < CA 11 / ST _ CA < 1.5$

CA11 represents the effective diameter of the first surface S1 of the first lens 111, and ST_CA represents the effective diameter of the hole of the aperture stop ST. When Equation 20 is satisfied, the optical system 110 may set an optical path of light emitted toward the aperture stop ST through the first lens 111. Preferably, Mathematical expression 20 may be satisfied the following condition: 1 < CA11 / ST_CA < 1.3.$2 < CA 11 / CG 0 < 8$

CG0 is the optical axis distance between the first lens 111 and the aperture stop ST or diffuser 119. If the optical system 110 satisfies Mathematical expression 21, the effective diameter and radius of curvature of the first lens 111 may be adjusted. Mathematical expression 21 can preferably satisfy: 4 < CA11 / CG0 < 7.5.$0 < CG 0 / CT 1 < 1$

When the optical system satisfies Equation 22, the optical axis distance between the first lens (111) and the stop (ST) or the diffuser (119), as well as the center thickness of the first lens (111), can be established, allowing for the control of distortion aberration. Preferably, the following condition may be satisfied: 0 < CG0 / CT1 < 0.5. $0 < ST _ CA / CA _ Max < 1$

CA_Max represents the largest effective diameter among the lens surfaces of the lenses. If the optical system satisfies Mathematical expression 23, the total optical axis length may be controlled. Preferably, 0.3 < ST_CA / CA_Max < 0.8 may be satisfied.$1 < CG _ Max / CG 0 < 4$

CG_Max denotes the maximum center distance among the distances between lenses within the optical system. When the optical system satisfies Mathematical expression 24, a relationship between the maximum center distance between lenses and the optical axis distance between the first lens 111 and the aperture stop ST or the diffuser 119 can be established. This allows for the adjustment of the total optical axis length and the suppression of an increase in the effective aperture of the first lens 111. Preferably, Equation 24 may be satisfied the following condition: 3.4 < CG_Max / CG0 < 4 or 3.4 < CG2 / CG0 < 4.$0.5 < CT 4 / BFL < 1.5$

BFL is the optical axis distance from the center of the light source-side surface of the fourth lens 114 to the light source 116. That is, BFL is the optical axis distance from the center of the eighth surface S8 of the fourth lens 114 to the light source 116. If Mathematical expression 25 is satisfied, the emitted light may be transmitted to the entire area of the third lens 103 by the fourth lens 114. Preferably, 0.8 < CT4 / BFL < 1.3 may be satisfied.$2 < BFL / CG 0 < 6$

In Mathematical expression 26, the distance CG0 between the first lens and the aperture stop, and the distance BFL between the fourth lens 114 and the light source may be set. If Mathematical expression 26 is satisfied, the distance between the object-side configuration and the light source-side configuration of the lens unit may be adjusted. Preferably, 3 < BFL / CG0 < 5 may be satisfied.$2 < ST _ CA / CG 0 < 8$

If the optical system satisfies Mathematical expression 27, the position of the diffuser 119 may be set, and due to the diffuser 119, the transmission optical system and the receiving optical system may be optically matched even if they provide different aspect ratios to each other. Preferably, 5 < ST_CA / CG0 < 7 may be satisfied.$1 < L 4 R 2 / CT 4 < 5$

L4R2 is the radius of curvature of the light source-side surface of the fourth lens. If Mathematical expression 28 is satisfied, the refractive power of the fourth lens 114 may be controlled and optical performance may be improved. Preferably, 1 < L4R2 / CT4 < 2 may be satisfied.$0.5 < L 4 R 2 / L 4 R 1 < 1.5$

L4R1 is the radius of curvature of the object-side surface of the fourth lens. If Mathematical expression 29 is satisfied, the refractive power of the fourth lens 114 may be controlled and optical performance may be improved. Preferably, 0.5 < L4R2 / L4R1 < 1 may be satisfied.$0 < L 1 R 1 / \left|L1R2\right| < 1$

L1R1 is the radius of curvature of the object-side surface of the first lens, and L1R2 is the radius of curvature of the light source-side surface of the first lens. If Mathematical expression 30 is satisfied, the refractive power of the first lens 111 may be controlled and optical performance improved. Preferably, 0 < L1R1 / |L1R2| < 0.5 is satisfied, in which case the distance between the first lens 111 and the aperture stop ST or diffuser 119 may be set.$L 1 R 2 < 0$

The light source-side surface of the first lens 111 has a shape that is blocked toward the light source side and can have a radius of curvature of 100 mm or more. Accordingly, the amount of change in light incident on the first lens 111 may be reduced. L1R1 > 0 is satisfied.$1 < \left|L2R1/L2R2\right| < 3$

L2R1 is the radius of curvature of the object-side surface of the second lens, and L2R2 is the radius of curvature of the light source-side surface of the second lens. If Mathematical expression 32 is satisfied, the refractive power of the second lens 112 may be controlled and optical performance improved, and the incident efficiency through the light source-side surface of the second lens 112 may be improved. Preferably, 1 < |L2R1 / L2R2| < 2 is satisfied, and L2R1 < 0 and L2R2 > 0 may be satisfied. $\left|L3R2\right| < L 3 R 1$

L3R1 is the radius of curvature of the object-side surface of the third lens, and L3R2 is the radius of curvature of the light source-side surface of the third lens. If Mathematical expression 33 is satisfied, the refractive power of the third lens 113 may be controlled and optical performance improved, and the effective diameter of the first and second lenses may be reduced by the radius of curvature of the third lens 113 and the distance between the second and third lenses. Preferably, L3R1 > 0 and L3R2 < 0 may be satisfied.$0 < CT _ Max / CG _ Max < 2$

In Mathematical expression 34, the maximum center thickness CT_Max among the lenses and the maximum distance CG_Max between adjacent lenses may be set. If Mathematical expression 34 is satisfied, the optical system can provide good optical performance at the focal length of the set field of view and can reduce TTL. Preferably, 1 < CT_Max / CG_Max < 1.5 may be satisfied.$1 < ΣCT / ΣCG < 4$

ΣCT is the sum of the center thicknesses of the lenses, and ΣCG is the sum of the distance between adjacent lenses. If Mathematical expression 35 is satisfied, the optical system can provide good optical performance at the focal length at the set field of view and can reduce the TTL. Preferably, 2 < ΣCT / ΣCG < 3 may be satisfied.$5 < ΣNd < 10$

ΣNd represents the sum of the refractive indices at the d-line of each of the multiple lenses. If Mathematical expression 36 is satisfied, the TTL may be controlled in an optical system 110 in which aspherical lenses and spherical lenses are mixed. Additionally, if the number of spherical lenses is greater than the number of aspherical lenses, the sum of the TTL and refractive indices may be set.$10 < ΣVd / ΣNd < 50$

ΣVd represents the sum of the Abbe numbers of each of the plurality of lenses. If Mathematical expression 37 is satisfied, the optical system 110 can have improved aberration characteristics and resolution. By setting the sum of the Abbe numbers and refractive indices of the lenses in Mathematical expression 37, optical characteristics may be controlled, and preferably, 15 < ΣVd / ΣNd < 27 may be satisfied.$50 < ΣCT * n < 100$

ΣCT is the sum of the center thicknesses of the plurality of lenses, and n is the number of lenses in the optical system. If Mathematical expression 38 is satisfied, TTL may be controlled. Preferably, 70 < ΣCT*n < 95 may be satisfied. Here, n is 4.$CT 2 < ET 2$

ET2 is the edge thickness of the second lens. If Mathematical expression 39 is satisfied, the light incident on the second lens may be refracted along the optical axis, thereby suppressing the increase in the effective diameter of the first lens.$8 mm < CA 11 < 15 mm$

CA11 is the effective diameter of the first object-side surface S1 of the first lens. If Mathematical expression 40 is satisfied, the optical system can increase the output light. Mathematical expression 38 preferably satisfies 8mm < CA11 < 13mm.$1 < Fno < 2$

F# is the F-number of the optical system. If Mathematical expression 41 is satisfied, a bright image may be provided.$2 < CA_Max / \left(2*LsH\right) < 6$

Mathematical expression 42 may be set with the maximum effective diameter CA_Max and the diagonal length of the light source; if satisfied, the optical system can maintain good optical performance and enable the configuration of a slim and compact sensor device. Mathematical expression 42 preferably satisfies 2 < CA_Max / (2*LsH) < 3.$0 < F / L 4 R 2 < 3$

F is the effective focal length of the optical system, and L4R2 is the radius of curvature of the light source-side surface of the fourth lens. If Mathematical expression 43 is satisfied, the effective focal length and the radius of curvature of the light source-side surface of the last aspherical lens are set, thereby controlling the effect on optical system reduction, e.g., TTL. Mathematical expression 43 preferably satisfies: 1 < F / L4R2 < 3.$0 < F / L 1 R 1 < 2$

In Mathematical expression 44, the effective focal length of the optical system and the radius of curvature of the object-side surface of the first lens are set to control the effect on the outgoing light and TTL. Mathematical expression 44 preferably satisfies: 0.5 < F / L1R1 < 1.$0 < EPD / L 4 R 2 < 2$

EPD refers to the size of the entrance pupil of the optical system 110. If the optical system 110 according to the embodiment satisfies Mathematical expression 45, the optical system 110 can control the outgoing light. Preferably, it may be satisfied the condition: 0.5 < EPD / L4R2 < 1.5.$0 < EPD / L 1 R 1 < 1$

In Mathematical expression 46, the size of the entrance pupil of the optical system 110 and the radius of curvature of the object-side surface of the first lens may be set, and if these conditions are satisfied, the optical system 110 can control the emitted light. Preferably, the condition 0.3 < EPD / L1R1 < 0.8 may be satisfied.$1 < \left|F1/F2\right| < 3$

F1 is the focal length of the first lens, and F2 is the focal length of the second lens. If Mathematical expression 47 is satisfied, the refractive power of the first and second lenses may be controlled, and the TTL and effective focal length (EFL) may be affected. Preferably, 1 < |F1 / F2| < 2 may be satisfied. The first and second lenses 111 and 112 have powers with opposite signs, allowing for the correction of aberrations.$2 < F 1 / F < 10$

In Mathematical expression 48, the focal length of the first lens and the effective focal length of the optical system may be set, and the refractive power of the first lens may be controlled.$2 < F 4 / F < 10$

In Mathematical expression 49, the focal lengths of the first and fourth lenses may be set, and the refractive power of the first and fourth lenses may be controlled. Preferably, 3 < F4 / F1 < 9 may be satisfied.$F 2 < 0$

F2 is the focal length of the second lens and has a negative value. The second lens can improve chromatic aberration caused by the third and fourth lenses.$20 mm < TTL < 60 mm$

TTL (Total track length) refers to the distance along the optical axis OA from the center of the first surface S1 of the first lens 111 to the imaging surface of the light source 116. By setting TTL to the above range in Mathematical expression 51, an optical system for a vehicle may be provided. Mathematical expression 51 preferably satisfies: 25 mm < TTL < 55 mm. Additionally, the TTL of the transmission optical system may be smaller than the TTL of the receiving optical system. Additionally, the number of lenses in the transmission optical system may be smaller than the number of lenses in the receiving optical system. Additionally, the number of aspherical lenses in the transmission optical system may be smaller than the number of aspherical lenses in the receiving optical system.$2 mm < LsH < 10 mm$

LsH is half the diagonal length of the light source. Mathematical expression 52 can set the diagonal length of the light source 116 and can provide an optical system having the size of a vehicle sensor. Mathematical expression 52 can preferably satisfy: 2 mm < LsH < 5 mm.$1.5 mm < BFL < 9 mm$

In Mathematical expression 53, the back focal length (BFL) is set to be greater than 1.5 mm and less than 9 mm, thereby improving the assembly of components and improving coupling reliability through the distance between the light source 116 and the last lens. Mathematical expression 53 can preferably satisfy: 5 mm < BFL < 7 mm. If the BFL is less than the range of Mathematical expression 53, some light emitted from the light source may not be emitted, which may cause a decrease in resolution. If the BFL exceeds the range of Mathematical expression 53, stray light may be emitted, which may degrade the aberration characteristics of the optical system.$5 mm < F < 30 mm$

Mathematical expression 54 can set the total focal length (F) to fit the vehicle's transmission optical system. Mathematical expression 54 may be satisfied: 10 mm < F < 20 mm and may be larger than the total focal length of the receiving optical system.$FOV < 70 degrees$

In Mathematical expression 55, FOV refers to the field of view (Degree) of the optical system 110, and a vehicle optical system having an FOV of less than 70 degrees may be provided. Preferably, the FOV may be satisfied: 20 ≤ FOV ≤ 50. The FOV of the optical system may be provided to be narrower than the FOV of the receiving optical system. That is, even if the FOV of the receiving optical system is widened by the diffuser 119, the decrease in sensitivity of the sensing portion may be prevented. In Mathematical expression 55, the range of the vehicle optical system may be set by the FOV. When Mathematical expression 55 is satisfied, the rate of change of the effective focal length and the rate of change of the FOV when the temperature changes from room temperature to high temperature may be set to 5% or less, for example, 0 to 5%. In addition, even if an aspherical lens is mixed with a spherical lens within the optical system 110, the degradation of optical properties may be prevented through temperature compensation and aberration correction by the aspherical lens made of glass material.$1 < TTL / CA_Max < 7$

Mathematical expression 56 can provide an improved automotive optical system by establishing a relationship between the total optical axis length of the optical system and the maximum effective diameter. Mathematical expression 56 can preferably satisfy: 1 < TTL / CA_Max < 3. $5 < TTL / LsH < 15$

Mathematical expression 57 can set the total optical axis length (TTL) of the optical system and the length in the diagonal direction from the center of the light source 116. If the optical system 110 according to the embodiment satisfies Mathematical expression 57, the optical system 110 may have TTL for application of the vehicle light source 116, thereby providing improved image quality. Preferably, Mathematical expression 57 may be satisfied: 6 < TTL / LsH < 11.$0 < BFL / LsH < 3$

Mathematical expression 58 may set the optical axis distance between the light source 116 and the fourth lens 114, and the length in the diagonal direction from the optical axis of the light source 116. If the optical system 110 according to the embodiment satisfies Mathematical expression 58, the optical system 110 may secure a BFL for application of the size of the vehicle light source 116, set the distance between the fourth lens 114 and the light source 116, and have good optical characteristics in the FOV. Mathematical expression 58 can preferably satisfy: 1 < BFL / LsH < 2.$1 < TTL / BFL < 15$

Mathematical expression 59 can set the total optical axis length (TTL) of the optical system and the optical axis distance (BFL) between the light source 116 and the last lens. If the optical system 110 according to the embodiment satisfies Mathematical expression 59, the optical system 110 can secure BFL. Mathematical expression 59 can preferably satisfy: 3 < TTL / BFL < 10.$1 < TTL / F < 10$

Mathematical expression 60 can set the total focal length (F) and the total optical axis length (TTL) of the optical system 110. Accordingly, an optical system for a driver assistance system may be provided. Mathematical expression 60 can preferably satisfy: 1 < TTL/F < 5. When the optical system 110 according to the embodiment satisfies Mathematical expression 60, the optical system 110 can have an appropriate focal length within the set TTL range and provides an optical system capable of maintaining an appropriate focal length and forming an image even as the temperature changes from low to high temperature. If it is below the lower limit of Mathematical expression 60, it is necessary to increase the refractive power of the lenses, making it difficult to correct spherical aberration or distortion aberration; if it exceeds the upper limit of Mathematical expression 60, the effective diameter or TTL of the lenses becomes longer, which may cause a problem where the imaging lens system becomes large.$1 < F / BFL < 4$

Mathematical expression 61 can set the total focal length (F) of the optical system 110 and the optical axis distance between the light source 116 and the last lens. If the optical system 110 according to the embodiment satisfies Mathematical expression 61, the optical system 110 may have a set FOV and an appropriate focal length, and may be provided as a vehicle optical system. In addition, the optical system 110 may minimize the distance between the last lens and the light source 116, thereby having good optical characteristics in the FOV. Mathematical expression 61 preferably satisfies: 2 < F / BFL < 3.$1 < F / LsH < 5$

Mathematical expression 62 may set the total focal length (F) of the optical system 110 and the diagonal length from the optical axis of the light source 116. Such an optical system 110 may have improved aberration characteristics in the size of the vehicle light source 116. Mathematical expression 62 preferably satisfies: 3 < F / LsH < 4.5.$1 < F / EPD < 3$

Mathematical expression 63 can set the total focal length (F) and the entrance pupil diameter of the optical system 110. Accordingly, the total brightness of the optical system may be controlled. Mathematical expression 63 can preferably satisfy: 1.2 < F / EPD < 2.$0 < EPD / LsH / FOV < 0.2$

Mathematical expression 64 can set the relationship between the entrance pupil diameter (EPD), the length of half the diagonal length of the light source, and the field of view. Accordingly, the total size and brightness of the optical system may be controlled. Mathematical expression 64 can preferably satisfy: 0 < EPD/LsH/FOV < 0.1.$10 < FOV / F # < 30$

Mathematical expression 65 establishes the relationship between the field of view of the optical system and the F-number (F#). Preferably, Mathematical expression 65 may be satisfied: 15 < FOV / F# < 25.$20 < \left(CT_Max+CG_Max\right) * n < 80$$200 < \left(FOV*TTL\right) / n < 500$

Preferably, depending on the FOV and the number (n) of lenses, Mathematical expression 67 may satisfy the condition: 200 < (FOV*TTL)/n < 300. Here, n is 4.$FOV < TTL$$1 < \left(TD/CA_Max\right) * n < 20$

Preferably, 1 < (TD/CA_Max)*n < 10 may be satisfied.

The transmission optical system 110 according to the embodiment may satisfy at least one or two of Mathematical expressions 1 to 69. In this case, the optical system 110 can have improved optical characteristics. Specifically, if the optical system 110 satisfies at least one of Mathematical expressions 1 to 35 or/and at least one of Mathematical expressions 36 to 69, the optical system 110 has improved resolution and can improve aberration and distortion characteristics. In addition, the optical system 110 can secure a BFL for applying a vehicle light source 116, compensate for the degradation of optical characteristics due to temperature changes, and minimize the distance between the last lens and the light source 116, thereby enabling good optical performance within the FOV.

Table 6 relates to the items of the Mathematical expressions described above in the optical system 110 of the embodiment, and concerns the TTL (Total track length) (mm), BFL (Back focal length), effective focal length (F), LsH, effective diameter (CA), the sum of the center thicknesses of each lens, the sum of the center distances between adjacent lenses, the sum of the Abbe numbers, the sum of the refractive indices, TD (mm), which is the optical axis distance from the first surface S1 to the eighth surface S8, the focal lengths F1, F2, F3, and F4 of each of the first to fourth lenses, the FOV, the edge thickness (ET), the F number, etc.

**[Table 6]**

| Items | Values | Items | Values |
|---|---|---|---|
| F | 15.290 | ET1 | 3.500 |
| F1 | 21.487 | ET2 | 4.803 |
| F2 | -12.756 | ET3 | 3.398 |
| F3 | 15.471 | ET4 | 5.581 |
| F4 | 135.479 | FOV | 29.59 |
| ∑Nd | 6.894 | EPD | 9.700 |
| ∑Vd | 164.860 | BFL | 6.637 |
| ∑CT | 20.800 | TD | 37.664 |
| ∑CG | 8.227 | LsH | 3.940 |
| ∑ET | 17.282 | SD | 37.264 |
| TTL | 35.664 | F-number | 1.576 |

Table 7 shows the result values for the above-described Mathematical expressions 1 to 35 in the transmission optical system 110 of the embodiment. Referring to Table 7, it may be seen that the optical system 110 satisfies at least one, two or more, or three or more of Mathematical expressions 1 to 35. Specifically, it may be seen that the optical system 110 according to the embodiment satisfies all of the Mathematical expressions 1 to 35. Accordingly, the optical system 110 can provide good optical performance within the FOV and excellent optical characteristics.

**[Table 7]**

| Mathematical expressions | | Values |
|---|---|---|
| 1 | 1 < CT1 / CT2 < 3 | 1.731 |
| 2 | 0.5 < CT4 / CT3 < 1.5 | 0.996 |
| 3 | 1 < CT3 / CT2 < 4 | 2.800 |
| 4 | 1 < CG2 / CT2 < 4 | 2.402 |
| 5 | 0.5 < CT3 / (CT1+CT2) < 1.5 | 1.025 |
| 6 | 2 < CG2 / CG1 < 5 | 4.225 |
| 7 | 5 < CG2 / CG3 < 20 | 7.507 |
| 8 | 0.5 < CT3 / (CT1+CG1+CT2) < 1 | 0.848 |
| 9 | 0.5 < SD/TTL < 1.5 | 0.957 |
| 10 | 1.70 < Nd1 | 1.847 |
| 11 | 0.5 < Nd1/Nd3 <1.5 | 1.000 |
| 12 | 1 < Nd1/Nd4 <1.5 | 1.097 |
| 13 | (Vd3*Nd3) < (Vd4*Nd4) | Satisfaction |
| 14 | TD < SD | Satisfaction |
| 15 | 1 < CA42 / CT4 < 3 | 1.519 |
| 16 | 1 < CA3/CA2 < 3 | 1.657 |
| 17 | 0.5 < CA1/CA2 < 1.5 | 0.985 |
| 18 | 1 < CA3/CA4 < 2 | 1.356 |
| 19 | 1 < CA32 / CA21 < 3 | 1.757 |
| 20 | 0.5 < CA11 / ST_CA < 1.5 | 1.097 |
| 21 | 3 < CA11/CG0 < 8 | 6.652 |
| 22 | 0 < CG0 / CT1 < 1 | 0.370 |
| 23 | 0 < ST_CA / CA_Max < 1 | 0.530 |
| 24 | 1 < CG_Max / CG0 < 4 | 3.753 |
| 25 | 0.5 < CT4 / BFL < 1.5 | 1.050 |
| 26 | 2 < BFL/CG0 < 6 | 4.148 |
| 27 | 2 < ST_CA / CG0 < 8 | 6.063 |
| 28 | 1 < L4R2 / CT4 < 5 | 1.290 |
| 29 | 0.5 < L4R2 / L4R1 < 1.5 | 0.836 |
| 30 | 0 < L1R1/\|L1R2\| < 1 | 0.145 |
| 31 | L1R2 < 0 | Satisfaction |
| 32 | 1 < \|L2R1/L2R2\| < 3 | 1.531 |
| 33 | \|L3R2\| < L3R1 | Satisfaction |
| 34 | 0 < CT_Max / CG_Max < 2 | 1.166 |
| 35 | 1 < ∑CT / ∑CG < 4 | 2.528 |

Table 8 shows the result values for the above-described Mathematical expressions 36 to 69 in the optical system 110 of the embodiment. Referring to Table 8, it may be seen that the optical system 110 satisfies at least one, two or more, or three or more of Mathematical expressions 36 to 69. Specifically, it may be seen that the optical system 110 according to the embodiment satisfies all of the Mathematical expressions 1 to 69. Accordingly, the optical system 110 can provide good optical performance within the field of view (FOV) and excellent optical characteristics.

**[Table 8]**

| Mathematical expressions | | Values |
|---|---|---|
| 36 | 5 < ∑Nd <10 | 6.894 |
| 37 | 10 < ∑Vd / ∑Nd <50 | 23.915 |
| 38 | 50 < ∑CT*n < 100 | 83.200 |
| 39 | CT2 < ET2 | Satisfaction |
| 40 | 8 < CA11 < 15 | 10.643 |
| 41 | 1 < F# < 2 | 1.580 |
| 42 | 1 < CA_Max / (2*LsH) < 6 | 2.322 |
| 43 | 0 < F / L4R2 < 3 | 1.701 |
| 44 | 0 < F / L1R1 < 2 | 0.771 |
| 45 | 0 < EPD / L4R2< 2 | 1.079 |
| 46 | 0 < EPD / L1R1 < 1 | 0.489 |
| 47 | 1 < \| F1 / F2 \| < 3 | 1.685 |
| 48 | 1 < F1 / F < 10 | 1.405 |
| 49 | 2 < F4 / F1 < 10 | 6.305 |
| 50 | F2 < 0 | Satisfaction |
| 51 | 20 < TTL <60 | 35.664 |
| 52 | 2 < LsH <10 | 3.940 |
| 53 | 1.5 < BFL < 9 | 6.637 |
| 54 | 5 < F < 30 | 15.290 |
| 55 | FOV < 70 | 29.590 |
| 56 | 1 < TTL / CA_Max < 7 | 1.949 |
| 57 | 5 < TTL / LsH < 15 | 9.052 |
| 58 | 0 < BFL / LsH < 3 | 1.685 |
| 59 | 1 < TTL / BFL < 15 | 5.374 |
| 60 | 1 < TTL / F < 10 | 2.332 |
| 61 | 1 < F / BFL < 4 | 2.304 |
| 62 | 1 < F / LsH < 5 | 3.881 |
| 63 | 1 < F / EPD < 3 | 1.576 |
| 64 | 0 < EPD/LsH/FOV < 0.2 | 0.083 |
| 65 | 10 < FOV / F# <30 | 18.778 |
| 66 | 20 < (CT_Max+CG_Max)*n < 80 | 52.022 |
| 67 | 200 < (FOV*TTL)/n < 500 | 263.823 |
| 68 | FOV < TTL | Satisfaction |
| 69 | 1 < (TD / CA_Max) *n < 20 | 8.233 |

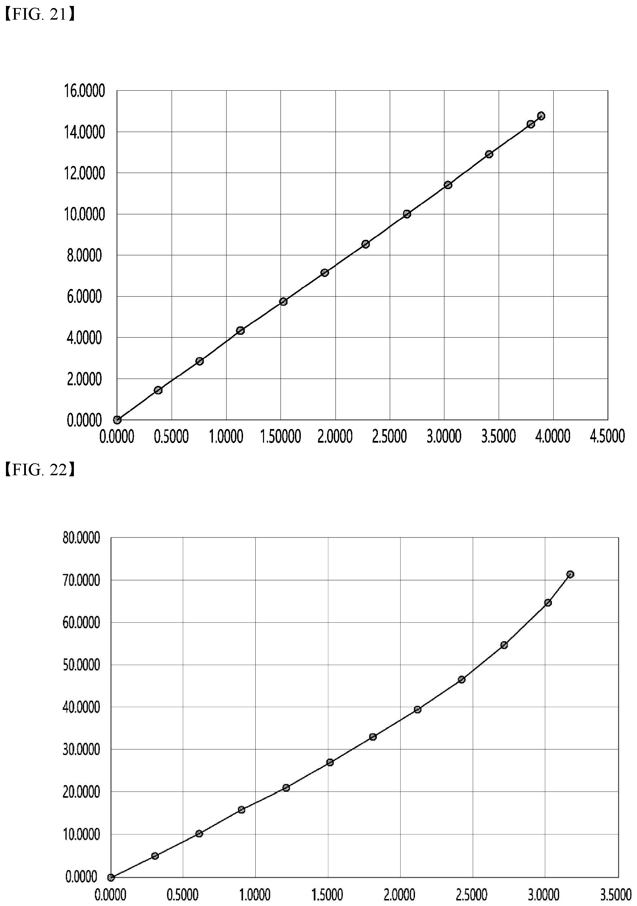

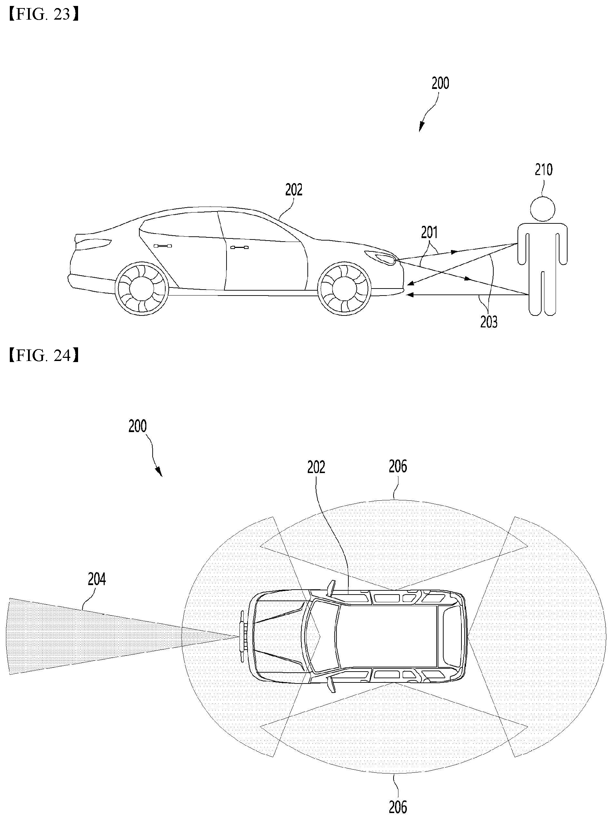

The pixel-unit matching results according to the transmitting and receiving optical systems of the invention are as shown in FIGS. 22 and 23. FIG. 22 is a graph showing the pixel-unit matching results according to the light source height and divergence angle of the transmission optical system; it may be seen that as the light source height increases from the center (0.0) to the end, i.e., 3.8 mm, and as the divergence angle increases, the pixel-unit matching increases. FIG. 23 is a graph showing the pixel-unit matching results according to the image height and field of view in the receiving optical system according to an embodiment of the invention; it may be seen that as the sensor height increases from the center (0.0) to the end, i.e., 3.2 mm, and as the field of view increases, the pixel-unit matching increases. Therefore, the matching efficiency of the transmitting and receiving optical systems in a linear LIDAR may be provided at 95% or higher.

FIG. 24 is a diagram showing an example of measuring an object in a vehicle equipped with the sensor system of the invention, and FIG. 25 is a diagram showing an example of surrounding surveillance in a vehicle equipped with the sensor system of the invention.

Referring to FIGS. 24 and 25, a vehicle 202 having a sensor system includes a transmission optical system that projects a laser beam 201 generated by a light source toward a target scene, and a receiving optical system that receives light 203 reflected from the target or object 210. Additionally, the sensor system includes a LIDAR system, which typically includes a controller that calculates distance information for the object 210 from the reflected light, and an element that can scan or provide a specific pattern of light, which may be a static pattern within a desired range and field of view (FOV). The transmitting and receiving optical systems are used to convert the received signal light into a measurement representing a point-by-point three-dimensional map of the surrounding environment within the LIDAR system range and FOV.

The receiving optical system and signal processing unit for the LIDAR calculate range information based on the time-of-flight measurement of the light pulse emitted from the light source. Additionally, information known about the light beam profile based on the specific design of the source and projector system is used to illuminate the scene on the target surface associated with a specific range, and positional information regarding the reflective surface is used to generate a complete x, y, z, or three-dimensional picture of the scene. In other words, a point-by-point 3D map of the surrounding environment represents a collection of measurement data indicating positional information from all surfaces reflecting light from the source to the receiver within the field of view of the LIDAR system. In this way, a 3D representation of an object is acquired within the field of view of the LIDAR system.

Also, a schematic diagram illustrating the two-dimensional field of view and range requirements of a typical surrounding sensing LIDAR system (200) for a vehicle (202) is shown. For example, an adaptive cruise control function may require a field of view and range (204) that has a narrower field of view compared to the side of the "surround view" field of view and range (206), but has long distance range requirements. Generally, the sensor functions of the vehicle may be enabled by a combination of LIDAR, radar, camera, and ultrasonic sensors. The combination of these sensor data that generates information about the surrounding environment is often referred to as "sensor fusion." The LIDAR may include a linear scan type.

Although the present invention describes a LIDAR system in the context of automobiles where LIDAR is widely used for autonomous driving, self-driving, or driver assistance vehicles, it should be understood that the embodiments may be applied to any vehicle. Other types of vehicles may include robots, tractors, trucks, airplanes, unmanned aerial vehicles, boats, ships, etc.

Features, structures, effects, etc. described in the embodiments above are included in at least one embodiment of the invention, and are not necessarily limited to only one embodiment. Furthermore, the features, structures, and effects illustrated in each embodiment may be combined or modified with respect to other embodiments by those skilled in the art in the field to which the embodiments belong. Therefore, contents related to these combinations and variations should be construed as being included in the scope of the invention.

In addition, although described based on the embodiments, this is only an example, this invention is not limited, and it will be apparent to those skilled in the art that various modifications and applications not illustrated above are possible without departing from the essential characteristics of this embodiment. For example, each component specifically shown in the embodiment may be modified and implemented. And the differences related to these modifications and applications should be construed as being included in the scope of the invention as defined in the appended claims.

## Claims

1. An optical system comprising:
a first to fifth lens aligned along an optical axis from an object toward a sensing portion; and
an optical filter disposed in any one of the regions between the second to fifth lenses,
wherein the first lens has a convex meniscus shape toward the object on the optical axis,
wherein an object-side surface of the third lens has a concave shape on the optical axis,
wherein a radius of curvature of an object-side surface of the first lens on the optical axis is L1R1,
wherein a radius of curvature of the sensor-side surface of the first lens on the optical axis is L1R2, and
wherein the following Mathematical expression satisfies: 1 < L1R1/L1R2 < 5.

2. The optical system of claim 1,
wherein an object-side surface of the second lens on the optical axis has a convex shape.

3. The optical system according to claim 1,
wherein a sensor-side surface of the fourth lens on the optical axis has a convex shape.

4. The optical system of claim 1,
wherein a sensor-side surface of the fifth lens on the optical axis has a convex shape.

5. The optical system of any one of claims 1 to 4,
wherein a radius of curvature of a sensor-side surface of the fifth lens is the largest among absolute values of radii of curvature of object-side and sensor-side surfaces of the first to fifth lenses.

6. The optical system of any one of claims 1 to 4,
wherein the optical filter is disposed between two lenses among the first to fifth lenses that have a center thickness thicker than the other lenses.

7. The optical system of any one of claims 1 to 4,
wherein the optical filter is disposed between the third lens and the fourth lens.

8. The optical system of any one of claims 1 to 4,
wherein an optical axis distance from the optical filter to a surface of the sensing portion is DF2,
wherein an optical axis distance from a sensor-side surface of the fifth lens to the surface of the sensing portion is BFL, and
wherein the following Mathematical expression satisfies: BFL < DF2.

9. The optical system of claim 7, comprising:
an aperture stop disposed around an object-side surface of the optical filter or a sensor-side surface of the third lens,
wherein an optical axis distance from the aperture stop to a surface of the sensing portion is SD, and
wherein the following Mathematical expression: 1 < SD/DF2 < 1.2.

10. The optical system of claim 7,
wherein an optical axis distance from a center of the object-side surface of the first lens to the optical filter is DF1, and
wherein the following Mathematical expression satisfies: DF2 < DF1.

11. The optical system of any one of claims 1 to 4,
wherein the first to fifth lenses are made of glass material.

12. The optical system of any one of claims 1 to 4,
wherein object-side and sensor-side surfaces of the second and fifth lenses are aspherical.

13. The optical system of any one of claims 1 to 4,
wherein the optical filter is a band-pass filter that passes a range of 890 nm to 960 nm, and
wherein a center distance between an object-side lens and a sensor-side lens relative to the optical filter is the largest among center distances between the first to fifth lenses.

14. The optical system of any one of claims 1 to 4,
wherein the first and second lenses have a negative refractive power, and
wherein the third to fifth lenses have a positive refractive power.

15. The optical system of any one of claims 1 to 4,
wherein a center distance between the third and fourth lenses is CG3,
wherein a thickness of the optical filter is OFt, and
wherein the following Mathematical expression satisfies: 2 < CG3 / OFt < 15.
